# EUROPÄISCHE PATENTSCHRIFT

(11) **EP 3 660 942 B1**
(45) Veröffentlichungstag und Bekanntmachung des Hinweises auf die Patenterteilung: **07.04.2021**
(21) Anmeldenummer: 18208963.1
(22) Anmeldetag: 28.11.2018
(51) Int. Cl.: H01M 2/10, B62K 1/00, H01M 10/04, B62M 6/90

(54) **ENERGIESPEICHER, DER AN EINEM TRANSPORTVEHIKEL WIE EINEM LASTENFAHRRAD, EINER SACKKARRE ODER DERGLEICHEN ANBAUBAR IST, UND AKKUMULATOR HIERFÜR**
ENERGY STORAGE DEVICE WHICH CAN BE ATTACHED TO A TRANSPORT VEHICLE SUCH AS A LOAD-CARRYING BICYCLE, A HAND CART OR SIMILAR, AND BATTERY FOR SAME
ACCUMULATEUR D'ÉNERGIE POUVANT ÊTRE MONTÉ À UN VÉHICULE DE TRANSPORT, TEL QU'UNE BICYCLETTE DE TRANSPORT, UN DIABLE À SAC OU ANALOGUES, ET ACCUMULATEUR ASSOCIÉ

(43) Veröffentlichungstag der Anmeldung: 03.06.2020
(73) Patentinhaber: BMZ Batterien-Montage-Zentrum GmbH, 63791 Karlstein (DE)
(72) Erfinder: BAUER, Sven, 63796 Kahl am Main (DE)
(74) Vertreter: Cremer, Christian

(56) Entgegenhaltungen:
- EP-A1- 2 287 065
- EP-A2- 2 423 096
- EP-B1- 1 092 826
- DE-A1-102016 102 361
- DE-U1-202010 012 387
- DE-U1-202011 001 232
- US-A1- 2015 266 543
- US-A1- 2017 263 914

## Beschreibung

Die vorliegende Erfindung behandelt einen Energiespeicher mit einem Schacht, der an einem Transportvehikel wie an einem Lastenfahrrad, wie an einem Treppensteiger, wie an einer Lastenkarre, wie an einem Hubwagen oder wie an einer Sackkarre als Energiequelle für eine Person kraftunterstützende Elektromotoren angebracht sein kann.

Des Weiteren behandelt die vorliegende Erfindung einen Akkumulator, der als Teil des Energiespeichers in diesem eingesetzt werden kann und auch durch einen gleichartigen Akkumulator austauschbar ist.

Mit anderen Worten, die vorliegende Erfindung behandelt einen elektrochemischen Energiespeicher nach dem Oberbegriff von Anspruch 1 sowie einen auf elektrochemischen Abläufen basierender Akkumulator nach dem Oberbegriff von Anspruch 16.

### Technisches Gebiet

Transportvehikel dienen zur Unterstützung bei dem Transport einer Last wie von mehreren aufgeschichteten oder gemeinsam arrangierten Paketen. Solche Transportvehikel gibt es als auf die unterschiedlichen Anwendungsfälle abgestimmte, häufig aus Rohren zusammengesetzte Rahmen mit ungefederten Rädern, wie z. B. in der Form von Lastenfahrrädern, aber auch in Gestalt von Treppensteigern, Lastenkarren, Hubwagen und Sackkarren. Insbesondere um bedarfsabhängig eine Kraftunterstützung dem Nutzer des Transportvehikels zur Verfügung zu stellen, werden Transportvehikel mit Energiespeichern und den Antrieb oder den Vortrieb unterstützenden Motoren ausgestattet.

Handelt es sich bei dem Transportvehikel um ein Lastenfahrrad, so ist ein solches häufig derart gestaltet, dass es nicht nur den das Fahrrad nutzenden Fahrradfahrer tragen kann, sondern darüber hinaus Abstell-, Aufnahme- und/oder Lagerflächen für weitere Lasten wie Päckchen und Pakete hat. Aufgrund des zusätzlichen Gewichts der mit dem Fahrrad zu transportierenden Lasten werden von kommerziellen Lieferdiensten, allgemein also im professionellen Bereich, d. h. z. B. von Fahrradboten gerne tretkraftunterstützte Lastenfahrräder benutzt. In der Regel gehört ein kleinerer Elektromotor zu dem Lastenfahrrad, der zusätzliche Antriebsleistung in rotierender Weise, häufig im Bereich der Tretkurbel oder an der Fahrradkette einleitend, bei Bedarf, z. B. bei Bergfahrten, liefern kann.

Eine Variante eines Lastenfahrrads wird vereinfacht durch seinen Fahrradrahmen ohne Sattel und ohne weitere Anbauteile in der EP 3 205 564 A2 (Anmelder: Herbert Weber; Veröffentlichungstag; 16.08.2017) grafisch dargestellt. Aus denjenigen Figuren der EP 3 205 564 A2, die den Fahrradrahmen mit aufgeklappter Ladeplattform zeigen, ist zu entnehmen, dass die zur Lieferung der Trethilfsenergie benutzten Batterien oder Akkumulatoren lose in einem schalenförmigen Gehäuseabschnitt des Fahrradrahmens eingestellt werden sollen.

Andere Transportvehikel sind z. B. solche, die bei einem Transport von Paketen und anderen Lasten über Treppen oder auf Werksgeländen hilfreich sein sollen. Beispiele von derartigen Transportvehikeln werden in der US 3 907 138 A (Patentinhaberin: Woodard Mfg. & Sales Co., Inc.; Veröffentlichungstag: 23.09.1975), der EP 2 261 167 B1 (Patentinhaberin: Jungheinrich AG; Veröffentlichungstag: 23.01.2013) und der DE 20 2007 019 691 U1 (Gebrauchsmusterinhaberin: Movexx Inter. B. V.; Eintragungstag: 27.07.2015) beschrieben. Aus der Normenwelt ergeben sich im Laufe der Zeit immer weiter zunehmend Anforderungen bezüglich konstruktiver Maßnahmen und inhärenter (Design-)Maßnahmen der Sicherheit. Beispielhaft darf die DIN EN 15194:2017 angeführt werden. Tritt dann noch hinzu, dass eine nachlässige Lagerung der Akkumulatoren, insbesondere mit größeren Energiedichten, wie z. B. für Lastenfahrräder, zu befürchten ist, sind hierauf abgestellt besondere Maßnahmen zur Reduktion der Gefährdung zusätzlich zu ergreifen. Werden die gleichen Akkumulatoren an den übrigen, oben aufgeführten Transportvehikeln verbaut, sind sie auch dort normungsgemäß auszugestalten. Es wäre also vorteilhaft, wenn besondere Sicherheitsvorkehrungen und Vorsichtsmaßnahmen im Zusammenhang mit dem Akkumulator oder den Akkumulatoren durch das Design der Akkumulatoreinheit bzw. des Energiespeichers ergriffen worden sind.

### Stand der Technik

Aus dem Bereich der Freizeitfahrräder mit Akkumulator, den sogenannten E-Bikes und den Pedelecs, können verschiedene Anregungen zur Gestaltung von Akkumulatorengehäusen, von gesamten Energiespeichern und zu deren Anbringung und zu ihren Befestigungen an einen Fahrradrahmen entnommen werden. Von den zahlreichen Varianten sollen einige im Folgenden kurz vorgestellt werden.

Aus einer der Figuren der EP 1 092 826 B1 (Inhaberin: Honda Giken Kogyo Kabushiki Kaisha; Anmeldetag: 13.10.2000) geht hervor, dass eine Batterie für den Einschub in ein Gehäuse gestaltet werden kann, wobei die Batterie idealerweise für diesen Vorgang einen Griff aufweist. Das Gehäuse ist durch eine Art Hohlprofil allseits umschließend ausgebildet. In der Nähe des Griffs befindet sich an dem Gehäuse ein Bedienhebel, der eine Arretierung der Batterie in einer Ausnehmung erlaubt, wobei die Ausnehmung an einem dem Griff gegenüberliegenden Ende der Batterie vorhanden ist.

Die DE 20 2010 012 387 U1 (Gebrauchsmusterinhaberin: Makita Corporation; Anmeldetag: 09.09.2010) zeigt universal einsetzbare, wieder entfernbare Akkumulatoren in der Gestalt von Batteriepacks, die sowohl in Elektrofahrrädern als auch in anderen radbetriebenen Beförderungswagen und auch in Werkzeugen wie Bohrmaschinen verwendet werden können. Zwischen Akkumulator und dem Elektrogerät, z. B. dem Elektrofahrrad, werden über zwei Anschlussstecker und über einen Verbindungsanschluss elektrische Verbindungen hergestellt Der Batteriepack und das Gegenstück hierzu haben eine solche Form, dass der Batteriepack oberflächlich geschoben in seine elektrisch angeschlossene Position gebracht werden kann.

In der US 2015/266 543 A1 (Anmelderin: ASKOLL EVA S.R.L.; Anmeldetag: 16.03.2015) wird ein boxartiger Akkumulator für ein tretkraftunterstütztes elektrisches Fahrrad vorgestellt, der vor dem Fahrrad an diesem befestigt werden soll, also im Bereich der Lenkstange. Ein elektrischer Verbinder ist an dem Gehäuse des boxartigen Akkumulators vorhanden, ein hierzu korrespondierender elektrischer Verbinder ist an einem Stützteil angebracht Durch eine Kippbewegung des Akkumulators zu einer klammerartigen Halterung sind die beiden Verbinder in Kontakt zu bringen. Über Kabel ist der Verbinder an dem Stützteil auf eine Steuerplatine weitergeführt.

Die DE 20 2011 001 232 U1 (Gebrauchsmusterinhaberin: Joy Industrial Co., Ltd.; Eintragungstag: 17.03.2011) beschreibt eine Akkuhalterung für ein elektrisches Fahrrad, die sich leicht ein- und ausrücken lassen soll, weil seitlich der Akkuhalterung zwei Positionierelemente mit Positionierkerben vorgesehen sind. In einem unterhalb der Akkuhalterung angeordneten Aufnahmeraum sind vier Kontaktfahnen mittig und senkrecht aufstehend vorhanden.

Gemäß der EP 2 738 080 B1 (Inhaberin: Honda Motor Corp. Ltd.; Anmeldetag: 19.07.2012) ist, wie z. B. in ihrer Figur 12 gezeigt ist, eine Batterie so gestaltet, dass sie in eine U-förmige Schiene einschiebbar ist. Zur Arretierung der Batterie gibt es ein Loch für einen Riegel (lock pin 262) eines Schlosses, wobei sich das Loch in der Nähe eines Griffes befindet. Elektrische Verbindungen bzw. Kontakte sind an einem dem Griff gegenüberliegenden Ende der Batterie angeordnet. Die Batterie ist vor der Führungsschiene entlang dieser, genauer auf den Rändern der Schiene aufzuschieben.

Ähnliche Befestigungs- und Anordnungskonzepte sind auch in der EP 0 822 135 B1 (Inhaberin: Yamaha Hatsudoki Kabushiki Kaisha; Anmeldetag: 31.07.1997), in der JPH 0 740 877 A (Anmelderin: Yamaha Motor Co. Ltd.; Anmeldetag: 26.07.1993) sowie in der JP 2001 088 769 A (Anmelderin: Yamaha Motor Co. Ltd.; Anmeldetag: 21.09.1999) beschrieben.

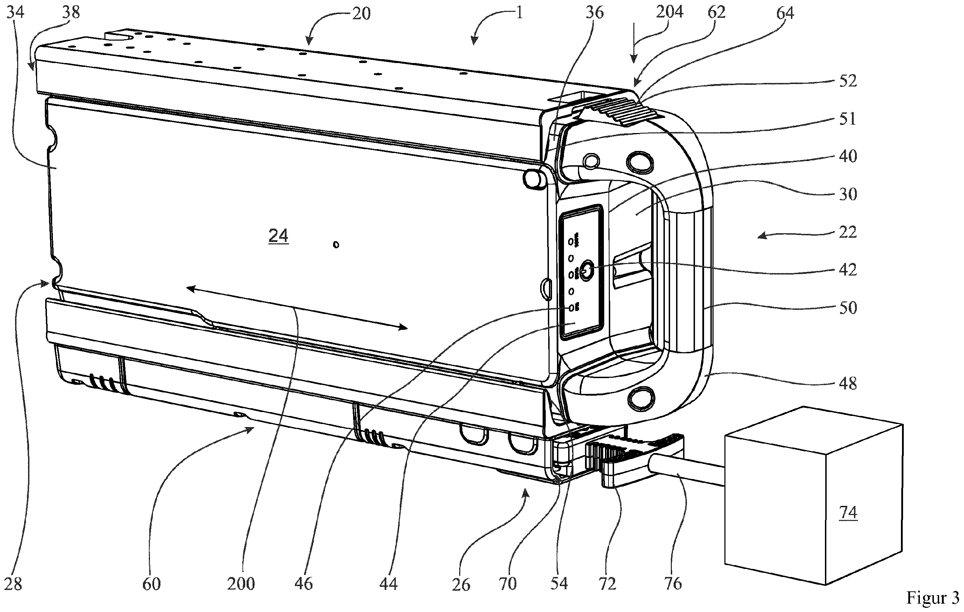

In der EP 0 728 662 A2 (Anmelderin: Yamaha Hatsudoki Kabishiki Kaisha; Anmeldetag: 23.02.1996) wird im Zusammenhang mit dem Batterieträger nach Figur 3 von einer inneren Box und einer äußeren Box gesprochen, wobei die innere Box elektrische Kontakte in ihrem Bodenbereich aufweist. An der äußeren Box sollte ein umklappbarer Hebel vorhanden sein und der Deckel der äußeren Box sollte verschließbar sein.

In der US 6,423,443 B1 (Patentinhaber; Honda Giken Kogyo Kabushiki Kaisha; Anmeldetag: 25.05.2000) wird beschrieben, dass eine Batterie mit einem Haltebügel in einem oberen Bereich an einer Sattelstange eines Fahrrads fixiert werden kann.

Die DE 10 2016 102 361 A1 (Anmelderin: Ford Global Technologies LLC; Anmeldetag: 11.02.2016) zeigt eine abnehmbare Sitzanordnung mit einem Gehäuse, in dem solche Dinge wie ein Akkumulator untergebracht sein können. Zusätzlich soll ein Ladekabel, das zu einer Kabelrolle aufgewickelt ist, in dem Gehäuse untergebracht sein und über eine Zusatzklappe gegenüber außen abgeschlossen sein.

In der EP 2 280 436 B1 (Patentinhaberin: Suzuki Motor Corporation Shizuoka-Ken; Anmeldetag: 30.07.2010), die sich laut Patentbezeichnung einem entfernbaren Batteriepack für elektrische Fahrzeuge widmet, wird auch ein Verschlussmechanismus behandelt, in den an einem einem Griff gegenüberliegenden Ende des Akkus mit einem Pin einzurasten sei. Die EP 2 280 436 B1 konzentriert sich schwerpunktmäßig auf den Fahrzeugtyp "elektrischer Roller" und versucht für diesen Fahrzeugtyp eine Energiespeicherlösung anzubieten.

Die Patentanmeldung JP 2002 170 537 A (Patentinhaber: Sanyo Electric Co Ltd.; Anmeldetag: 14.06.2002) dürfte im Vergleich mit den Abbildungen der zuvor aufgeführten Druckschriften eine antiquiertere Entwicklungsstufe einer Batterieanordnung mit Handgriff und Kontakten zeigen. D. h., im Vergleich mit der JP 2002 170 537 A lässt sich der Design-Fortschritt in der Gestaltung von Akkumulatorengehäusen sehr gut sehen.

Die Patentanmeldung CH 701 675 A1 (Anmelderin: Fairly Bike Manufacturing Co., Ltd.; Anmeldetag: 20.08.2009), auch veöffentlicht als EP 2 287 065 A1 (Anmeldetag: 19.08,2010), beschäftigt sich mit der Idee, einen Akkumulator und einen an dem Akkumulator angebrachten Fahrradsattel als eine gesondert transportable und von einem Fahrradfahrer mitnehmbare Baugruppe auszugestalten, die auf eine von einer Teleskopstange und einer Druckfeder geführte Abdeckung aufgesetzt werden kann, um über an der Abdeckung platzierte elektrische Kontaktpunkte, ggf. erst in einem in einen Rahmen eines Efektrofahrrads eingeschobenen Zustand, Energie an einen Elektromotor des Elektrofahrrads liefern zu können.

Ein elektrisches Arbeitsfahrzeug, speziell ein fahrbarer Rasenmäher, wird in der US 2017/0 263 914 A1 (Anmelderin: Kubota Corporation; Anmeldetag: 21.11.2016) beschrieben. Eine größere Anzahl Batteriepacks, die jeweils ein eigenes Gehäuse haben und herausnehmbar sind, lassen sich jeweils über einen Schalter zwischen dem jeweiligen Batteriepack und einer Energieversorgungselektronik zum Antrieb eines Motors freischalten. Für den Motorantrieb muss mindestens ein Batteriepack eingesteckt sein, d. h. die Batteriepacks sind parallel verschaltet. Der Motor ist mit einem Antriebsrad verbunden. Für jedes Batteriepack wird im eingesteckten Zustand mithilfe einer Schätzeinheit der Ladezustand bestimmt. In der US 2017/0 263 914 A1 wird vorgeschlagen, ein geladenes Batteriepack als Reserveeinheit vorzuhalten, damit genügend Energie für eine zuletzt durchzuführende Rückfahrt zur Ladestation bereitsteht. Als ein Vorteil wird hervorgehoben, dass zwischen den Batteriepacks und deren Aufnahme keine Steuersignalleitungen für Schaltoperationen erforderlich seien. Die Aufteilung der Energieversorgung auf z. B. fünf Batteriepacks, die jeweils in einen eigenen Schacht manuell einzuschieben sind, erfolgte unter anderem zur Erleichterung des Auswechselvorgangs, der zum Ausbau entladener und zum Einbau aufgeladener Batteriepacks regelmäßig erforderlich sein dürfte.

Die EP 2 423 096 A2 (Anmelderin: Cycling Sports Group, Inc.; Anmeldetag: 26.08.2011) zeigt verschiedene Varianten einer Vorrichtung, bei der der Akkumulator in einem der Rahmenteile, z. B. unterhalb einer Sattelstütze, eines Fahrrads angeordnet ist. Ein Fahrradrahmen sei so zu gestalten, dass ein Antriebshilfsakkumulator in einem Schacht eines Fahrradrahmens stecken bleiben kann, während z. B. der Sattel abgenommen wird. Mit Hilfe eines Griffs soll ein Herausziehen des ein Gehäuse umfassenden Akkumulators aus dem Schacht des Fahrradrahmens erleichtert werden. In einigen Zeichnungen (siehe Figur 19, Figur 24A, Figur 24D sowie Figur 25A) werden elektrische Kontakte in Gestalt von Kontaktfahnen gezeigt, die als männliche Kontakte an einem plattenähnlichen Verbinder auszuführen seien und auf die ein Akkumulator aufzustecken ist, um eine elektrische Verbindung zu einem Antriebsmotor herzustellen. Für den Verbinder werden wiederum drei verschiedene Anordnungs- und Befestigungsvarianten vorgestellt, z. B. auf einer Feder gelagert. Sowohl die seitliche Ergänzung von Führungspinnen an dem Akkumulatorgehäuse neben korrespondierenden weiblich gestalteten Kontaktaufnahmen als auch die schwimmende Anordnung des die männlichen Kontakte tragenden Verbinders führen zu dem logischen Schluss, dass der längliche Akkumulator selbst bei einer Schachtführung nur mit Ausrichtschwierigkeiten eine elektrische Verbindung über die männlich gestalteten Kontaktfahnen zu dem Antriebsmotor herstellen kann.

Auch lassen sich in der Schutzrechtsliteratur einige Dokumente finden, die sich mit solchen Batterien für elektrische Fahrräder beschäftigen, die in einer Ebene eines Gepäckträgers des jeweiligen Fahrrads einzuschieben sind.

In der DE 20 2017 107 506 U1 (Inhaberin: Dongguan Hong Lin Industrial Co., Ltd.; Anmeldetag: 11.12.2017) wird z. B. in Figur 3 ein Batteriekasten gezeigt, der mithilfe eines Haltegriffs auf Gleitschienen in einen Aufnahmerahmen einführbar ist. Der dargestellte Aufnahmerahmen ist U-förmig gestaltet, d. h., der Halterahmen hält den Batteriekasten an den längeren Schmalseiten. An einem dem Haltegriff gegenüberliegendem Ende des Batteriekastens befindet sich ein Satz Anschlüsse und ein Rückhaltebereich, wobei der Rückhaltebereich mit einem Drehhaken abschließbar ist. Der Drehhaken befindet sich an einem Steuerkasten. Die Form der Aufnahmekammer hat ein ganz spezielles, in sich markantes Aussehen. Im Zusammenhang mit dem Griff zeigen die Figuren keine Fixiermöglichkeit, d. h. der Akkumulator wird wohl ausschließlich durch die Schienen in Position gehalten.

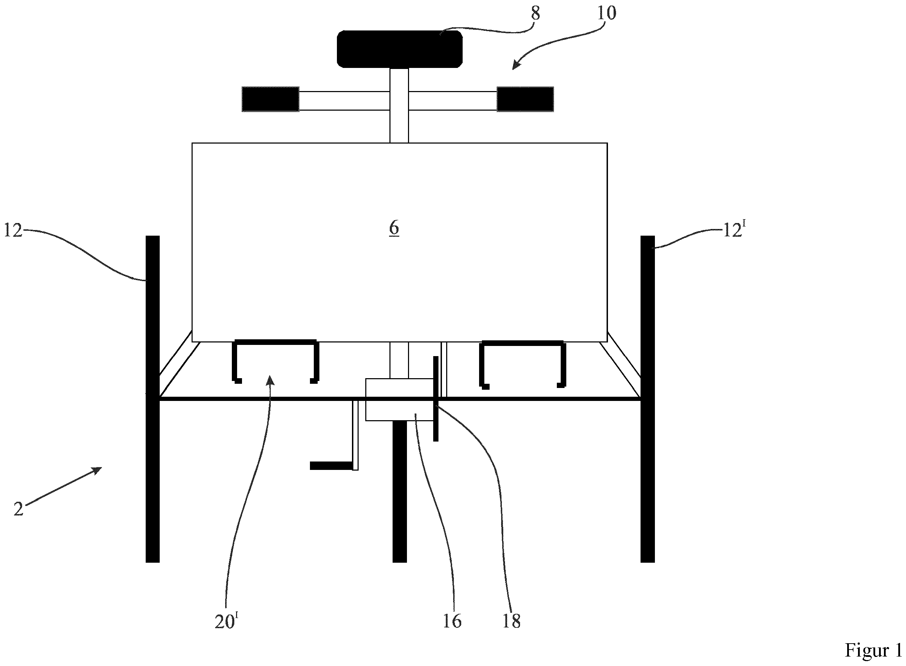

In der DE 20 2010 008 304 U1 (Inhaber: P. Ronge; Anmeldetag: 17.08.2010) wird ein Gehäuse beschrieben, das, wie in Figur 1 gezeigt ist, an einem Gepäckträger aufzuschieben ist. Das Gehäuse wird zwar als Kasten mit einem U-förmigen nach unten offenen Querschnitt beschrieben, jedoch soll dieser nach unten offene Querschnitt eine Passform für zwei V-förmige, nach oben auseinander gehende, offene Tragstreben sein. In der Beschreibung wird außerdem von komplementären elektrischen Kontakten des Gehäuses gesprochen. Das Gehäuse ist mit Handgriff ausgestaltet. Wie eine sichere Kontaktierung aber gewährleistet werden soll, scheint die Beschreibung nicht zu behandeln. Es kann die Befürchtung geäußert werden, dass das Gehäuse keine Maßnahme gegen eine Verschiebung in eine Richtung aufweist.

Die Dokumente CN 205 801 406 U (Inhaberin: Zejiang Goccia Electric Technology Co. Ltd.; Anmeldetag: 22.06.2016) sowie JP 2001 247 069 A (Anmelderin: Mitsubishi Heavy Ind. Ltd.; Anmeldetag: 12.06.2000) zeigen jeweils ein Batteriegehäuse, das in einer Zwischenebene zwischen dem eigentlichen Gepäckträger und dem Hinterrad montierbar sein soll. Gemäß Figur 5 der JP 2001 247 069 A weist das Batteriegehäuse zumindest einen Handgriff auf. Außerdem wird ein Lockkey in der Beschreibung erwähnt, der eine Diebstahlsicherung darstellen soll. Dadurch soll auch eine Positionssicherung des Batteriegehäuses sichergestellt sein. Beide Dokumente scheinen keine weitere Akkuaufnahme für das Batteriegehäuse vorzusehen.

Die zuvor genannten Druckschriften gelten mit ihrer Benennung als vollumfänglich in vorliegende Erfindungsbeschreibung inkorporiert. Hierdurch soll vermieden werden, nicht mehr erneut und wiederholt allgemein bekannte Zusammenhänge zwischen Gehäuse, Rahmenbefestigung, Akkumulatorausrichtung und sonstige Üblichkeiten im Zusammenhang mit Fahrrädern zu erörtern, sondern durch Verweis auf die Druckschriften als ebenfalls definiert für vorliegende Erfindung ansehen zu dürfen.

### Aufgabenstellung

Nachdem ein Sichten und Untersuchen von in der Vergangenheit an Fahrrädern angebrachten Akkumulatoren, insbesondere auf Basis von Lithium-Ionen-Zellen, die häufig als Rundzellen verbaut sind, ergeben hat, dass diese den aktuellen Normen nicht vollumfänglich entsprechen dürften, sind andere Lösungen für Akkumulatoren nötig, insbesondere für jene, die an Fahrrädern anzubringen sind. Hierbei ist zu bedenken, dass Akkumulatoren für Lastenfahrräder in der Regel ein gewisses Volumen und eine gewisse Masse haben, sodass ein bisher üblicher Montageort "Sattelstange" als eher ungeeignetere Lösung anzusehen ist. Zudem kommt hinzu, dass Lastenfahrräder deutlich häufiger und intensiver genutzt werden als viele Freizeitfahrräder. Die Lastenfahrradfahrer sind darauf angewiesen, dass ihr jeweiliges zu nutzendes Lastenfahrrad mit Akkumulatoren ausgestattet ist, die möglichst zu Beginn jeder größeren Fahrradtour ausreichend geladen sind. Komplizierte und aufwändige Ladevorgänge sollten möglichst vermieden werden können. Für die die Lastenfahrräder nutzenden Boten steht im Vordergrund, sich auf ihre Botentätigkeit konzentrieren zu können, ergo möchten sie möglichst wenig Zeit und Aufwand in die Wartung und Pflege des Antriebshilfssystems stecken.

Wäre ein geeigneter Energiespeicher bekannt, so wäre dieser auch bei vergleichbaren Lastengeräten wie Treppensteiger und Sackkarren verbaubar, zumal einige der aufgezählten Lastentransportgeräte keinen Montageort anbieten können, der bereits aufgrund seiner Position, d. h. von sich aus einen gewissen Schutz für den Nutzer des Geräts bietet.

Es besteht also ein Bedarf nach einer technischen Lösung, durch die Energiespeicher für Transportvehikel, insbesondere für Lastenfahrräder, Treppensteiger und Hubkarren bzw. Lastenkarren, zur Verfügung gestellt werden können, die möglichst sicher dem regelmäßigen, häufig nicht besonders pfleglichen Einsatz gerecht werden.

### Erfindungsbeschreibung

Die erfindungsgemäße Aufgabe wird durch einen Energiespeicher nach Anspruch 1 gelöst, ein geeigneter Akkumulator wird in Anspruch 16 behandelt. Vorteilhafte Weiterbildungen lassen sich den abhängigen Ansprüchen entnehmen.

Um die geforderte Sicherheit durch den Energiespeicher und/oder den Akkumulator zu erhöhen, sind besondere Maßnahmen an verschiedenen Bauteilen, Komponenten und Baugruppen sowie in dem Zusammenspiel dieser Bauteile, Komponenten und Baugruppen ergriffen worden, was nachfolgend im Einzelnen bauteilgruppenweise erläutert wird.

Der Energiespeicher umfasst mehrere Bauteile und Baugruppen und ist für eine Montage an einem Tragelement wie an einem Gepäckträger, insbesondere einer flachen, vorzugsweise wannenartigen, Aufnahme oder an einem Querträger des Transportvehikels gestaltet. Der Energiespeicher kann vorteilhafterweise eine blockartig Erscheinungsform haben, d. h., er hat (überwiegend) einen quaderförmigen Kern und bietet somit (im Wesentlichen) rechteckig zueinander angeordnete größere und kleinere Seiten. Eine der größten Seiten des Energiespeichers ist für eine Montage des Energiespeichers an einem, vorzugsweise im hinteren Bereich z. B. des Lastenfahrrads vorhandenen, Gepäckträger oder an einem Rahmen eines Treppensteigers oder einer E-Sackkarre gestaltet. Ein Schacht des Energiespeichers und ein Teil eines Trägers, wie z. B. einer Gepäckaufnahme bzw. des Gepäckträgers des Lastenfahrrads, können flächig aufeinander liegend verbunden werden, um die Bauteile zu verbinden und so den Energiespeicher an oder in dem Transportvehikel einzubauen.

Eine Komponente des Energiespeichers ist ein Akkumulator. Zu dem Akkumulator gehören wiederum weitere (Einzel-)Bauteile und Baugruppen, wie ein schalenförmiges Gehäuse.

Zur elektrischen Einbindung des Energiespeichers in das Antriebs-(Hilfs-)(Tret-)System hat der Energiespeicher ein Stecksystem, wobei von einem der Stecker des Stecksystems wenigstens ein Kabel, insbesondere über Litzen des Kabels, auf einen am Lastenfahrrad, am Treppensteiger oder an der, insbesondere elektrisch angetriebenen, Sackkarre angeordneten Antriebsmotor, wie z. B. ein Synchronmotor, weitergeführt wird. Mit anderen Worten, zu dem Stecksystem gehören wenigstens zwei Stecker, vorteilhafterweise umfasst das Stecksystem des Energiespeichers sogar mehr als zwei Stecker, wobei insbesondere einer der Stecker zur Weiterleitung an einen Elektromotor in dem Kabelbaum und/oder in der elektrischen Anordnung vorhanden ist.

Wie bereits oben angesprochen, ist Teil des Energiespeichers ein Aufnahmeschacht. Der Aufnahmeschacht kann auch als erstes, äußeres Gehäuse bezeichnet werden, wobei ein Gehäuse (von sich aus) nicht vollumschließend sein muss. Ein weiteres Gehäuse ist Teil des Akkumulators. Die beiden Gehäuse, äußeres Gehäuse bzw. Aufnahmeschacht und inneres Gehäuse bzw. Akkumulatorgehäuse, sind dimensionsmäßig und durch ihre Oberflächenformung aufeinander abgestimmt. Hierdurch kann der Akkumulator in den Schacht des Energiespeichers hineingeschoben werden.

Der Energiespeicher ist Teil des Antriebssystems bzw. des Antriebshilfssystems des Transportvehikels (wie z. B. des Fahrrads). Der Energiespeicher liefert die notwendige Antriebsenergie an den (Hilfs-)Motor des Transportvehikels. Außerdem sind Kabel bzw. Leitungen in dem Fahrrad vorhanden, über die die elektrische Energie sowie gegebenenfalls zusätzliche Informationen zum Antrieb, zum Energiespeicher, zu den Zellen des Akkumulators und/oder zu Betriebszuständen des Gesamtsystems übermittelt werden können.

Es kann auch gesagt werden, der Akkumulator ist Teil des Energiespeichers. Aufnahmeschacht des Energiespeichers und Akkumulators sind aufeinander abgestimmt. Vorteilhaft ist es, wenn zu einem Energiespeicher mehrere Akkumulatoren zu zählen sind. Ist ein Energiespeicher so gestaltet, dass ein einzelner Akkumulator aus dem Energiespeicher herausgenommen werden kann, so lässt sich der Akkumulator durch einen vergleichbaren, ähnlichen Akkumulator ersetzen, der z. B. elektrisch geladen ist. Auf diese Weise ist ein schneller Austausch der Akkumulatoren möglich. Durch Einschieben eines Akkumulators in den Energiespeicher wird weitere Energie dem Antriebssystem des Transportvehikels (Lastenfahrrads) dargeboten. So ist ein schneller, zügig abzuwickelnder Austausch zwischen Akkumulatoren möglich; es kann hervorgehoben werden, das Lastenfahrrad behält seine Funktionstüchtigkeit bei bzw. gewinnt sie kurzfristig zurück.

In dem gänzlich umschließenden Gehäuse des Akkumulators sind einzelne Zellen vorhanden. Vorteilhaft sind Lithium-Ionen-Zellen als Teil des Akkumulators. Mehrere solche Lithium-Ionen-Zellen können nebeneinander angeordnet im Gehäuse des Akkumulators vorhanden sein. Aufgrund der langjährigen Erfahrungswerte mit Rundzellen, wobei hervorgehoben wird, dass es bei dieser Aussage nicht auf die konkreten Abmessungen ankommt, werden gerne Lithium-Ionen-Rundzellen im Inneren des schalenförmigen Gehäuses des Akkumulators zu einem Array angeordnet und elektrisch verbunden. Geeignete Zellen sind z. B. die Zellen des Typs 18650 und des Typs 21700.

Das zuvor Gesagte kann auch dahingehend zusammengefasst werden, dass der Energiespeicher einen Schacht und zumindest einen in diesen Schacht einschiebbaren Akkumulator umfasst. Die äußere Abmessung des Akkumulators ist auf den Schacht abgestimmt. Der Akkumulator hat Oberflächen, die so geformt sind, wie der für die Berührung vorgesehene Bereich der Innenseite des Schachtes verläuft bzw. wie seine Innenformgebung ist. Der Akkumulator wird in den Schacht hineingeschoben, um in seiner eingeschobenen Position Teil des Antriebssystems des Transportvehikels (Lastenfahrrads) zu werden.

Ist der Energiespeicher für die Montage an einem Lastenfahrrad vorgesehen, so ist der Schacht vorteilhafterweise für eine Befestigung in Fahrtrichtung des Lastenfahrrads ausgelegt. Der Schacht hat eine längste Erstreckung, die in Fahrtrichtung positioniert werden kann. Der Schacht ist dafür vorgesehen, mit einer seiner äußeren Seiten an einer Unterseite des Ladebereichs des Lastenfahrrads befestigt zu werden. Der Schacht ist vorteilhafterweise ein Mehrfaches schmaler als die, in der Regel, zweirädrig ausgeführte Hinterachse des Lastenfahrrads. Somit ist es möglich, mehrere Energiespeicher nebeneinander zu einem (Gesamt-)Energiespeicher zusammengeschlossen an tragenden Bauteilen des Lastenfahrrads anzubringen.

Zumindest an seiner Innenseite ist der Schacht mit formbildenden bzw. formgebenden Verläufen versehen. Der Akkumulator ist in seinem Gehäuse - sozusagen - ein Negativ zum Inneren des Schachtes.

Wird nach der Betrachtung des Inneren des Schachtes und die formschlüssige Oberflächenformgebung der Innenseite des Schachtes und des Akkumulators die weitere Beschäftigung mit dem Energiespeicher und seines Akkumulators in Richtung auf das Innenleben des Akkumulators fortgesetzt, so umfasst ein Akkumulator ein Array aus Akkumulatorzellen. Eine größere Anzahl von Akkumulatorzellen, wie z. B. 50 Akkumulatorzellen, 75 Akkumulatorzellen oder sogar 100 Akkumulatorzellen, sind zu einem "Gesamtakkumulatorpack" elektrisch miteinander verbunden. Durch eine elektrische Verbindung der einzelnen Akkumulatorzellen, die zu einem Array zusammengefasst sind, bietet der Akkumulator eine höhere Klemmenspannung als es die Leerlaufspannung der Akkumulatorzelle ist. Durch ein Parallelverschalten mehrerer Akkumulatorzellen lässt sich der von dem Akkumulator verfügbare Strom steigern. Vorteilhafterweise gehören zu einem Array aus Akkumulatorzellen mehrere Akkumulatoren, die untereinander in Serie verschaltet sind. Auch gehört zu einem Array aus Akkumulatorzellen ein Zusammenschluss von mehreren Akkumulatorzellen, die parallel verschaltet sind.

Die Akkumulatorzellen sind in einem Gehäuse von der Umwelt geschützt angeordnet. Das Gehäuse besteht aus mehreren Teilgehäusen, vorzugsweise besteht das Gehäuse aus zwei Teilgehäusen. Jedes Teilgehäuse bietet eine Schale zur Aufnahme eines Teils der einzelnen Akkumulatorzellen. So ist es möglich, zwei Schalen zu einem Gesamtgehäuse zusammenzufügen. Das Gehäuse setzt sich aus mehreren schalenförmigen Einzelgehäusen zusammen.

Zu dem Energiespeicher gehört auch ein Stecksystem, zu dem wenigstens - wie einleitend schon angesprochen - zwei Stecker gehören. Werden noch mehr als zwei Stecker Teil des Energiespeichers, so erhöht sich die Flexibilität für und durch den Energiespeicher bei gleichzeitiger Beibehaltung einer erhöhten Sicherheit für den Nutzer des Energiespeichers.

Der Stecker, der unmittelbar an einer Außenseite des Akkumulatorgehäuses angesiedelt ist oder sogar Teil des Gehäuses des Akkumulators ist, kann als erster Stecker bezeichnet werden. Über diesen Stecker fließt nicht nur die Energie für den Antrieb des Lastenfahrrads, sondern der Stecker hat auch einzelne Kontakte, über die Steuersignale übertragen werden können. In ein und demselben Stecker befinden sich Kontakte, die für unterschiedliche Leistungen zur Verfügung stehen. Ein leistungsmäßig schwächeres Steuersignal wird genauso über den Stecker geleitet wie ein hierzu im Vergleich leistungsmäßig stärkeres elektrisches Signal bzw. ein elektrischer Stromfluss. Der Stecker vereinigt Kontakte, die unterschiedliche Aufgaben erfüllen. Die Kontaktrasterabstände sind vorteilhafterweise alle gleich, obwohl es unterschiedliche Typen (insbesondere im Sinne einer Nutzung) von Kontakten in dem Stecker gibt. Als Kontaktrasterabstand wird der Abstand eines Kontaktes zu dem nächsten Kontakt (z. B. vom ersten Kontakt zu dem in unmittelbarer Nachbarschaft zum ersten Kontakt liegenden Kontakt) bestimmt. Werden einzelne Kontaktabstände betrachtet, so bietet der erste Stecker wenigstens fünf, eventuell auch sechs oder sogar mehr als sechs (insbesondere gleichartige) Kontaktrasterabstände. Besonders vorteilhaft ist es, wenn alle Kontakte eines Steckers auch tatsächlich genutzt werden, d. h., wenn es nach jedem Kontaktrasterabstand eine Position im Stecker gibt, an der sich tatsächlich ein Kontakt befindet. Hat der Stecker sechs (6) Kontakte, so gibt es fünf Kontaktrasterabstände, die vorteilhafterweise alle gleich groß sind.

Die Sicherheit während des Betriebs des Energiespeichers als Energiequelle für ein Transportvehikel wie ein Lastenfahrrad lässt sich noch steigern, wenn eine Elektronik im Akkumulator vorhanden ist, die zumindest eine der folgenden Funktionen übernimmt, nämlich zum einen die Funktion "Überwachung eines oder mehrerer Akkumulatorenparameter" und/oder zum anderen die Funktion "Passiv- oder Aktivschalten eines der Pinne bzw. eines der Kontakte des Steckers". Vorteilhafterweise ist die Akkumulatorelektronik im Inneren des Akkumulators angeordnet. Die Akkumlatorelektronik kann als eine von den Akkumulatorzellen versorgte Elektronik in dem Inneren des Akkumulators eingebaut sein. Vorteilhafterweise ist die Akkumulatorelektronik mit einer Messeinrichtung ausgestattet.

Geeignete Parameter zur Charakterisierung, Kennzeichnung oder Bestimmung eines "Gesundheitszustands" eines Akkumulators sind Parameter wie Temperatur, Strom und Spannung. Die Akkumulatorelektronik kann zur Messung einer Temperatur gestaltet sein. Die Akkumulatorelektronik kann zur Messung einer Spannung gestaltet sein. Die Akkumulatorelektronik kann zur Messung eines Stroms gestaltet sein. So kann die Akkumulatorelektronik dafür ausgelegt sein, (mehrere, insbesondere verschiedene) Temperaturen des Akkumulators oder des Energiespeichers zu messen (z. B. einzelne Temperaturen an einzelnen Akkumulatorzellen; z. B. eine Gehäuseinnen- oder eine Gehäuseaußentemperatur, eine (repräsentative) Gesamttemperatur des Energiespeichers, eine (repräsentative) Akkumulatorzellen-Umgebungstemperatur oder eine (insbesondere errechnete) Mittelwerttemperatur. Genauso ist es möglich, dass die Akkumulatorelektronik für eine Messung einer Spannung eines Teils der Akkumulatorzellen (Zellteilspannung), einer Gruppe bzw. einer höheren Akkumulatorzellenteilspannung, einer vom Akkumulator verfügbaren Gesamtspannung, eines Stroms an einer Stelle im Inneren des Akkumulators oder eines gesamt zur Verfügung stehenden Stroms sowie eines Sammelsuriums von einzelnen, gemessenen Strömen ausgestaltet ist.

Die Bedienung des Akkumulators, insbesondere wenn er in den Schacht hinein- oder herausgeschoben werden soll, vereinfacht sich, wenn der Akkumulator einen Bereich umfasst, der eine als Griff nutzbare Fläche oder Ausformung wie Auswölbung ist. Im Bereich einer Grifffläche oder eines Griffes kann ein Nutzer des Transportvehikels (des Lastenfahrrads) oder ein mit der Wartung des Transportvehikels beauftragter Mitarbeiter den im Schacht angeordneten Akkumulator bewegen und - idealerweise - anhand des Griffes durch die Gegend tragen. Vorteilhaft ist also ein Griff, der an einer Seite des Akkumulators angeordnet ist, wobei jene Seite zu bevorzugen ist, die weiterhin nach einem Einschieben in den Schacht zugänglich bleibt (z. B. die Stirnseite).

Der erste Stecker stellt den Übergang vom Inneren des Akkumulators zu den weiteren Komponenten des Lastenfahrrads her. Der Stecker ist vorteilhafterweise an der Seite vorzufinden, die der Grifffläche oder dem Griff gegenüberliegt. Der Stecker ist nur erschwert zugänglich, eine (versehentliche) Berührung durch einen Nutzer wird vermieden.

Der Schacht kann auch als ein mit mehreren Schiebeschienen ausgestatteter Hohlkörper bezeichnet werden. Die ein Stück der Breite des Akkumulators abdeckenden Schienen des Schachts des Energiespeichers bieten glatte Oberflächen zum Darüberschieben bzw. oberflächlichen Entlangschieben des Akkumulators. Der Schacht hat auf seiner Innenseite Schubbereiche. Der Akkumulator bietet die spiegelbildlichen Schubflächen. Die Schubflächen sind quer zu der vorgesehenen Schubrichtung des Akkumulatorgehäuses im Schacht ausgerichtet. Der Akkumulator kann nicht beliebig schwingen oder sich hin- und herbewegen. Der Akkumulator befindet sich in einer stabilen Führung, was zur Sicherheit beiträgt.

Wird die Betrachtung nun auf den Akkumulator fokussiert, der für die Vervollständigung des Energiespeichers geeignet ist, so fallen vorteilhafterweise (bei einem von außen auf ihn gerichteten Blick) ein Griffbereich oder ein Griff, insbesondere auf einer Seite des Akkumulatorgehäuses, und ein Stecker, insbesondere auf genau dem gegenüberliegenden Teil des Gehäuses, sowie mehrere spezielle Schubflächen auf. So können z. B. vier parallel zueinander angeordnete Schubflächen Teil des Akkumulatorgehäuses sein. Über den Griff oder die Grifffläche eingeleitete Kräfte gelangen auf die Kontakte des Steckers. Eine Einleitung von Querkräften wird möglichst weit reduziert. Eine unsichere Kontaktierung durch verbogene Kontakte oder durch nicht geschlossene Kontakte sollte nicht eintreten.

Der Akkumulator ist eine Batterie aus parallel und/oder seriell verschalteten Stromspeichern. Diese einzelnen Akkumulatorzellen sind vorteilhafterweise parallel zueinander ausgerichtet. Mehrere (Einzel-)Stromspeicher sind untereinander parallel verschaltet, während, insbesondere andere, Stromspeicher miteinander in serieller Anordnung verschaltet sind. Die Akkumulatorzellen sind zu einem Array zusammengefasst, in dem Akkumulatorzellen untereinander parallel verschaltet sind und in dem Akkumulatorzellen in Serie verschaltet sind. Jede Akkumulatorzelle gehört zu einem Verbund aus mehreren Akkumulatorzellen. Die blockartige Anordnung der Akkumulatorzellen sorgt für eine erhöhte Sicherheit durch Stabilität und Stabilisierung.

Zwischen der ersten Seite des Akkumulatorgehäuses und der zweiten Seite des Akkumulatorgehäuses, wobei die beiden Seiten durch den Griff bzw. durch die als Griff vorgesehene Fläche und den Stecker bestimmbar sind, sind in rechtwinkliger Anordnung hierzu die einzelnen Akkumulatorzellen platziert. Vorteilhafterweise sind alle Akkumulatorzellen zueinander parallel arrangiert. Von einer Seite des Gehäuses bis zur anderen Seite des Gehäuses des Akkumulators sind die Akkumulatorzellen aufgereiht. Auf einer Seite gibt es den Stecker, der mehr als vier (4) Kontakte aufweist.

Besonders vorteilhaft ist es, wenn es keinen weiteren Stecker an dem Gehäuse gibt. Mit anderen Worten, es gibt einen einzigen Stecker, über den sowohl die Energie in und aus dem Akkumulator geleitet wird als auch Kommunikationssignale. Eine Reduktion der Anzahl der Stecker am Akkumulator führt zu einer Erhöhung der Sicherheit, z. B. der Kontaktierungssicherheit. Auch ist es vorteilhaft, wenn es nur einen Griff an dem Akkumulatorgehäuse gibt. Es kann auch gesagt werden, auf der einen Seite des Akkumulatorgehäuses ist dieser Stecker, der auch als Zentralstecker bezeichnet werden kann. Auf der anderen Seite des Akkumulatorgehäuses ist der Griff des Gehäuses.

Darüber hinaus ist es vorteilhaft, wenn der Stecker nicht genau zentral, d. h. in der Mitte der Seite, angeordnet ist, sondern in einem Randbereich. Ein derart außermittig angeordneter Stecker kann in der Nähe des Schachtgehäuses seine Bestimmungsposition finden. Verwindungsstrecken über das Akkumulatorgehäuse sind kurz gehalten. Der Stecker befindet sich vorteilhafterweise in der unteren, linken Ecke des Gehäuses des Akkumulators. Diese Positionierung steigert die Sicherheit, weil die Gefahr von Querkräften weitergehend reduziert wird.

Außerdem trägt es zur Sicherheit bei, dass die einzelnen Kontakte des Steckers alle ebenengleich sind. Keiner der Kontakte steht über eine Ebene hinaus. Alle Kontakte reichen bis zu einer gemeinsamen Ebene. Eine gleichzeitige Kontaktierung aller Kontakte, insbesondere unter Vermeidung von Spannungsbögen, wird sichergestellt.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Zu dem Energiespeicher gehört nicht nur der erste Stecker, sondern das Stecksystem hat noch wenigstens einen Gegenstecker, der der Gegenstecker zum ersten Stecker ist. Der Gegenstecker ist auf einer Innenseite des Schachts befestigt. Vorzugsweise befindet sich der Gegenstecker in einem Endbereich des Schachtes. Somit kann der Akkumulator vollständig in den Schacht eingeschoben werden. Der Schacht ist zumindest um die Länge des Gegensteckers länger als der Akkumulator mit seinem ersten Stecker. Der mechanisch feste Gegenstecker, der an dem Schacht befestigt ist, ist zugleich ein Endanschlag für den ersten Stecker und damit für den Akkumulator. Der Akkumulator kann auf Anschlag eingeschoben werden. Diese Positionierung durch Stecker und Gegenstecker trägt zur Steigerung der Bediensicherheit bei.

Vorteilhafterweise sind Stecker und Gegenstecker zueinander paarartig ausgestaltet. Stecker und Gegenstecker sind gleichartig gestaltet. Besonders vorteilhaft ist, wenn alle Kontakte des Steckers und alle Kontakte des Gegensteckers jeweils berührungssicher ausgestaltet sind. Sollte ein Nutzer des Energiespeichers, z. B. eine den Akkumulator tragende Person, mit seinen Fingern entweder an Stecker oder an Gegenstecker geraten, so wird vorteilhafterweise keine leitende Verbindung zwischen dem Steckeräußeren oder dem Gegensteckeräußeren auf der einen Seite und den jeweiligen Kontakten innerhalb des Steckers auf der anderen Seite hergestellt. Der Stecker bzw. der Gegenstecker ist berührungssicher.

Die Vorteile des Steckers können noch weiter gesteigert werden, wenn der Stecker polungsunabhängig ausgestaltet ist. Hat der Stecker zwar eine Kodierung, nicht jedoch eine bestimmte Polung in sich kodiert, sondern bestimmen sich positive und negative Potenziale anhand einzelner Pinne bzw. Kontakte des Steckers, die alle untereinander gleichartig oder sogar identisch sind, so ergibt sich eine Polungsunabhängigkeit. Erst durch die Heranführung der Potenziale an den Stecker auf der jeweiligen Innenseite des Steckers, z. B. über Kabel oder über eine oder mehrere Leiterbahnen, ergibt sich die jeweilige Polung eines einzelnen Pins oder Kontakts. Vorteilhaft ist es darüber hinaus, wenn die Kontakte nicht stromflussrichtungsabhängig gestaltet sind. D. h., ein einzelner Kontakt kann sowohl für eine Stromschlussrichtung aus dem Stecker als auch für eine Stromflussrichtung in den Stecker gestaltet sein. Sowohl ein Kontakt für eine Stromflussrichtung aus dem Stecker als auch ein Kontakt für eine Stromflussrichtung in den Stecker können vorteilhafterweise identisch sein.

Besonders vorteilhaft ist es, wenn sämtliche Kontakte aller Stecker des Energiespeichersystems gleichartig aufgebaut sind. So ist es möglich, dass alle Kontakte aller Stecker polungsunabhängig und auch stromflussunabhängig ausgestaltet sein können.

Neben dem eigentlichen Aufnahmeraum für den Akkumulator kann der Schacht noch ein weiteres Kompartiment aufweisen. Ein solches Kompartiment kann als Ladesteckerkompartiment gestaltet sein. Ein solches Kompartiment kann sich z. B. entlang des Schachtes bzw. entlang der Schieberichtung innerhalb des Schachts bzw. des Akkumulators in dem Schacht erstrecken. Die Schieberichtung des Akkumulators und die Längserstreckung des Kompartiments sind vorzugsweise parallel ausgerichtet. In einem solchen Fall ist das Kompartiment eine längliche, dünne Anordnung, die parallel zur Schieberichtung oder Zugrichtung des Akkumulators verläuft, wobei insbesondere das Kompartiment Raum für eine zusätzliche, vorgeschaltete Elektronik bietet.

Die elektrischen Verbindungen untereinander können so ausgestaltet sein, dass von dem Kompartiment zu dem ersten Stecker eine elektrische Verbindung, z. B. über ein Kabel, existiert. Soll das Kompartiment von dem Akkumulator abkoppelbar sein, so ist es vorteilhaft, wenn Gegenstecker und Stecker (in elektrischem Sinne bzw. aus Blickwinkel des Energieflusses in einer Ladebetriebsweise) hinter dem Kompartiment sitzen.

Das Kompartiment kann dafür vorgesehen sein, elektrische Ladeflüsse (elektrische Ströme) und Ladungsbetriebsweisen zu steuern und zu regeln. So ist es möglich, einen Ladebetriebszustand des Akkumulators über einzelne elektrische Kontakte mit Hilfe des Kompartiments herzustellen. Hierdurch können elektrische Ladeflüsse weitergeführt werden. Ein Kompartiment, wenn dieses als Kompartiment für die Steuerung von Ladebetriebszuständen vor den Steckern erster Stecker und Gegenstecker vorgeschaltet ist, stellt eine zusätzliche Absicherung des Energiespeichers da.

Zur besseren Ausrichtung und Sicherung des Akkumulators im Schacht, damit insgesamt der Energiespeicher geschaffen ist, kann eine Verriegelung vorgesehen sein. Die Verriegelung kann den Akkumulator mit dem Schacht arretieren. Die Verriegelung ist zur Arretierung des Akkumulators im Schacht geeignet. Hierfür hat die Verriegelung einen krafteinleitenden Mechanismus, der z. B. seitlich angeordnet sein kann. Durch eine Querkrafteinleitung ist es möglich, ein Herausrutschen des Akkumulators aus dem Gegenstecker zu verhindern. Wird die Arretierung z. B. auf einer dem Stecker abgewandten Seite angeordnet, so kann ein Anpressmoment erzeugt werden, das ausreichend stark dimensioniert ist, obwohl die seitlich eingeleitete Kraft in einem einstelligen Newtonbereich angesiedelt ist, z. B. bei nur 5 Newton oder eventuell auch bei 6 Newton, also unterhalb von 10 Newton. Unter Nutzung der Hebelwirkung über das Gehäuse des Akkumulators lässt sich die Kontaktierung des Steckers sicherstellen. Trotz einer geringen Kraftwirkung an einem Ende des Akkumulators reicht das hebelverstärkte Moment aus, das auf den Stecker und den Gegenstecker einwirkt, um eine sichere Kontaktierung zu bewirken.

Der Frontbereich des Akkumulators bzw. des Energiespeichers kann noch weitergehend genutzt werden als nur, wie oben angesprochen, als Grifffläche. So ist es möglich, dass der Akkumulator zum einen in einen Griff übergeht, zum anderen kann der Akkumulator an jener Stelle, der Frontseite ein Display für Informationen an einen Nutzer aufweisen. Wird dann neben dem eigentlichen Akkumulator im Frontbereich des Energiespeichers, z. B. in Nachbarschaft zu dem Griff des Akkumulators, eine Steckerbuchse vorgehalten, in die ein Ladekabel eingesteckt werden kann, so kann selbst im eingebauten Zustand der Akkumulator über diese sogenannte "Ladebuchse" bzw. über diesen sogenannten "Ladestecker" elektrisch aufgeladen werden, obwohl der Akkumulator unverändert an seinem eingeschobenen Platz im Schacht verbleibt. Als weitere Maßnahme der Sicherheitserzeugung kann ein Deckel auf der Kontaktbuchse zu liegen kommen, der zuerst zu beseitigen ist, bevor über die Kontaktbuchse eine Ladung des Akkumulators stattfinden kann.

In einer Ausgestaltung des Akkumulators ist es vorgesehen, den Stecker als lang gestreckten Stecker mit unterschiedlichen Kontakten auszubilden. Hierbei ist es möglich, die Leistungskontakte, d. h. jene Kontakte, über die der größte Strom fließt, jeweils an dem äußeren Ende des länglichen Steckers anzusiedeln. Liefert das Array eine entsprechend hohe Spannung, z. B. mehr als 48 Volt oder sogar mehr als 60 Volt, so kann durch die mittels Kontaktreihung erzeugte Beabstandung, die also durch zwischengeschaltete Kontakte gebildet wird, eine höhere Spannungsfestigkeit erzeugt werden. Auch trägt eine größere Beabstandung dazu bei, dass eine bessere thermische Gleichverteilung geschaffen wird. So ist in einer Ausgestaltung vorgesehen, vier andersartige Kontakte zwischen den Leistungskontakten, von denen je ein Leistungskontakt an dem äußeren Ende vorhanden ist, zu platzieren. Über die mittleren Kontakte kann z. B. eine Datenkommunikation erfolgen. Über die äußeren Kontakte kann ein deutlich höherer Leistungsstromfluss stattfinden. Physisch können trotzdem alle Kontakte - vorteilhafterweise - gleich ausgestaltet sein. In Bezug auf ihre Abmessungen können die Kontakte also identisch sein. Dabei ist es möglich, den Abstand von einem ersten Kontakt zu einem zweiten Kontakt zwischen allen Kontakten des Steckers gleich zu belassen. Von einem Kontakt bis zu seinem nächsten Kontakt ist immer wieder der gleiche Abstand in dem Stecker vorzufinden. In Versuchen hat es sich gezeigt, dass ein fixes Maß mit einem Abstand zwischen 7 mm und 8 mm ein günstiges Maß ist (im Sinne einer Kontaktrasterung bzw. einem Kontaktrasterabstand).

Der Stecker selbst kann mit einer Außenschale ausgestattet sein, in deren Inneren die einzelnen Leistungskontakte und die Kontakte für die Datenkommunikation angeordnet sind. Die Außenschale kann eine verschweißte, z. B. ultraschallverschweißte, Schale sein. Der Stecker ist, insbesondere wenn alle Kontakte nebeneinander in einer gleichen Reihe angeordnet sind (einreihiger Stecker), ein Kunststoffflachstecker.

Das Gehäuse des Steckers, das in einer vorteilhaften Ausführungsform z. B. schalenartig ist, kann entweder mit einem vorstehenden Pin oder mit einem Aufnahmeeinschnitt, wie einem in einer Seite des Gehäuses hineinlaufenden Schlitzes, ausgestattet sein, wodurch zum Ausdruck gebracht werden kann, für welche Spannung der Stecker ausgelegt ist. Zusätzlich kann auf dem Stecker ein Spannungswert angegeben sein, z. B. durch hervorstehende Zahlen, hergestellt durch Negativ in einer Gußform des Steckergehäuses. Durch Freigabe oder Sperre eines Kodierungspins beim Zusammenführen eines Steckers und seines Gegensteckers können beide Stecker als aufeinander abgestimmt passförmig aufsteckbar sein oder an einem Zusammenstecken gehindert sein. Die Passform bietet eine Kodierung, wodurch das Spannungsniveau der Leistungspinne bzw. Leistungskontakte festgelegt wird.

In einer vorteilhaften Weiterbildung können alle Kontakte eines Steckers sowohl mit einem männlichen Bereich als auch mit einem weiblichen Bereich ausgestattet sein. Jeder Kontakt ist sozusagen ein Zwitter-Kontakt. Ein erster Teil des Steckers hat einen männlichen Bereich und ein zweiter Teil des Steckers hat einen weiblichen Bereich. Hierbei können die beiden unterschiedlichen Bereiche ungefähr bei der Hälfte der durch die Stirnseite der Kontakte beanspruchten Fläche, insbesondere bei ungefähr der Hälfte der Höhe einer Stirnfläche des Kontakts, in ihren männlichen Bereich und in ihren weiblichen Bereich geteilt sein. So kann jeder einzelne Kontakt im Wesentlichen hälftig geteilt sein. Die eine Hälfte ist der männliche Teil des Kontakts und die andere Hälfte ist der weibliche Teil des Kontakts.

In einer Weiterbildung der zuvor dargestellten Steckervarianten ist es auch möglich, dass jeder Stecker, zumindest aber der erste Stecker, Einzelkontakte aufweist, d. h., jeder Kontakt ist von einem nächsten Kontakt als separierter, räumlich abgeschlossener Kontakt zu erkennen. Hierdurch werden Übersprechverhalten, Stromdurchschläge, Spannungsdurchschläge und unerwünschte gegenseitige Beeinflussungen möglichst weit unterbunden, zumindest aber reduziert. Fehlverhalten, insbesondere hervorgerufen an dem ersten Stecker, wird unwahrscheinlicher.

Jeder der Einzelkontakte kann blockartig ausgestaltet sein. Ein elektrisch leitender, federnder Anschluss, wie eine Kupfer-Zunge oder ein Pin mit einem verzinnten Leiter, können im Inneren des Einzelkontaktes vorhanden sein. Die äußere Hülle des Einzelkontaktes ist ein, vorzugsweise nicht-leitender, Massivkörper, in dessen Innerem z. B. Kupfer-Zunge vorhanden ist.

Damit das entsprechende Gegenteil des Gegensteckers in den ersten Stecker - bzw. allgemein gesprochen in den Stecker - einführbar ist, ist es vorteilhaft, wenn die Gegenseite U-förmig umschlossen wird, insbesondere der männliche Bereich des Gegensteckers. In einer möglichen Ausgestaltung bzw. Ausformung des Steckers schließt sich an einen männlichen Bereich ein Freiraum an, der durch eine U-förmige Begrenzung abgeschlossen ist.

Die Berührsicherheit wird weiter gesteigert, wenn der Einzelkontakt nur in bestimmten Bereichen elektrisch leitfähig ausgestaltet ist, wobei die Stellen, an denen der Einzelkontakt elektrisch leitfähig ist, nicht unmittelbar durch eine Frontalberührung berührt werden kann. Von außen berührbar sind nur die aus nicht-leitfähigem Material wie Kunststoff geschaffenen blockartigen männlichen Teile eines Kontakts.

Teil der Elektronik des Akkumulators können Schalter sein, die dazu beitragen, dass Stromflüsse zugeschaltet oder unterbrochen werden, insbesondere auf dem Weg zu oder von einem der Stecker. So ist es möglich, Kontakte und Pinne der einzelnen Stecker stromlos zu schalten, z. B. in dem Fall, dass der Akkumulator nicht vollständig in dem Schacht hineingeschoben ist, bis dieser über seinen Stecker mit dem Gegenstecker sicher verriegelt an ein weiterführendes Kabel oder ein weiterführende Leiterbahnen angeschlossen ist.

Der erste Stecker hat, wie bereits oben ausgeführt, Leistungskontakte. Darüber hinaus kann der erste Stecker Kontakte für eine serielle Kommunikation haben. Eine Variante einer seriellen Kommunikation ist eine Kommunikation nach einem CAN-Bus-Protokoll. Hierbei kann im Nahbereich des Steckers, z. B auch unmittelbar im Stecker, ein Treiber-IC für eine serielle Kommunikation vorgehalten sein, z. B. ein CAN-Bus-Transceiver. Alternativ bietet sich die Akkumulatorelektronik für so ein Treiber-IC an. Über einen Kabelbaum kann die serielle Kommunikation signalmäßig weitergeleitet werden.

Der Akkumulator hat ein Innenleben mit Akkumulatorzellen und gegebenenfalls einer Elektronik. Der Akkumulator wird außen durch sein Gehäuse begrenzt, das z. B. durch eine Kunststoffspritzgießtechnik hergestellt sein kann.

Ränder des Akkumulators können mit Hinterzügen ausgestaltet sein. Diese Hinterzüge können als Schubschienen oder Gleitkörper auf Schubschienen des Schachtes platzierbar sein.

Es eignet sich, 18 mm im Durchmesser betragende oder 21 mm im Durchmesser betragende Rundzellen, die insbesondere zylindrisch sind und als 18600-Zellen, als 18650-Zellen oder als 21700-Zellen bezeichnet werden, im Inneren des Akkumulators aufzureihen.

Die Zellen können durch Füllstücke untereinander auf Abstand gehalten werden. Die Füllstücke können darüber hinaus die Zellen parallel zueinander ausrichten. In einer Ausgestaltung sind die Füllstück hülsenartig. Die Akkumulatorzellen sind fixiert. Belastungen auf das Gehäuse des Akkumulator durch Impulse durch umherwandernde Akkumulatorzellen sind reduziert.

Außerdem ist es vorteilhaft, wenn noch ein Einschaltknopf oder eine Bedienoberfläche vorhanden ist, die z. B. durch ein Griff geschützt, auf der Frontseite angeordnet für die unmittelbare Betrachtung durch einen Nutzer vorgesehen ist.

Die zuvor dargestellten Kombinationen und Ausführungsbeispiele lassen sich auch in zahlreichen weiteren Verbindungen und Kombinationen weiterbilden.

Die weiter oben erwähnten Akkumulatoren können mit elektrischen Nennkapazitäten von mehr als 10 Amperestunden (10 Ah) ausgestattet sein, bei einem Spannungsniveau zwischen 36 Volt und 60 Volt. Für (Hilfs-)Antriebe von Lastenfahrrädern hat es sich gezeigt, dass gespeicherte Energiemengen von 500 Wattstunden bis 2000 Wattstunden praktisch und sinnvoll sind.

Das erfindungsgemäße System bietet eine erhöhte Flexibilität beim Betrieb des Antriebssystems. Es sind verschiedene Energieversorgungspfade und -möglichkeiten gegeben. So ist es auch möglich, zumindest kurzfristig, den Akkumulator aus dem Schacht zu nehmen und das motorisch angetriebene oder unterstützte Gerät, wie ein Treppensteiger, aus einer Netzversorgung, z. B. durch ein Spannungsversorgungsgerät, zu versorgen. In einer besonders einfach umzusetzenden Anwendung wird der Gegenstecker, also jener Stecker, der als Stecker zu dem Stecker des Akkumulators in dem Schacht eingebaut ist, am Ladegerät direkt angeschlossen. Der Stecker des Ladegeräts und der Stecker im Schacht, der auch als Gegenstecker bezeichnet wird, sind aufeinander abgestimmt. Hierbei ist es günstig, wenn der Schacht so viel Freiraum lässt, dass das Ladegerät in dem Schacht "versenkt" werden kann. Der Stecker des Ladegeräts und der Stecker am Akkumulator entsprechen sich im Wesentlichen, wenn sie nicht sogar gleich sind. Das Ladegerät arbeitet dann lediglich als Stromversorgungsgerät. Alternativ ist es auch möglich, den Akkumulator im eingesteckten Zustand über ein Kabel durch ein Ladegerät zu laden.

Wie in einigen der nachfolgend erörterten Figuren zu sehen ist, ist der Schacht an drei von vier Seiten komplett geschlossen. Die geöffnete Seite, d. h. jene Seite, die zumindest teilweise eine Aussparung hat, kann zur leichteren Entwärmung bzw. Wärmeabfuhr durch Konvektion genutzt werden; was wiederum zur Steigerung der Sicherheit des Energieversorgungssystems beiträgt.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 ein erstes Lastentransportvehikel, genauer ein Lastenfahrrad zeigt,
Figur 2 ein zweites Lastentransportvehikel, genauer eine Sackkarre zeigt,
Figur 3 ein Energiespeicher- und -versorgungssystem mit einem entsprechenden Energiespeicher zeigt,
Figur 4 einen Energiespeicher mit Kompartiment in einer Schnittansicht zeigt,
Figur 5 eine erste Ausführungsform eines in einem entsprechenden Energiespeicher verwendbaren Stecker mit Gegenstecker zeigt,
Figur 6 einen Stecker in Frontansicht zeigt und
Figur 7 einen Stecker in Schnittansicht zeigt.

### Figurenbeschreibung

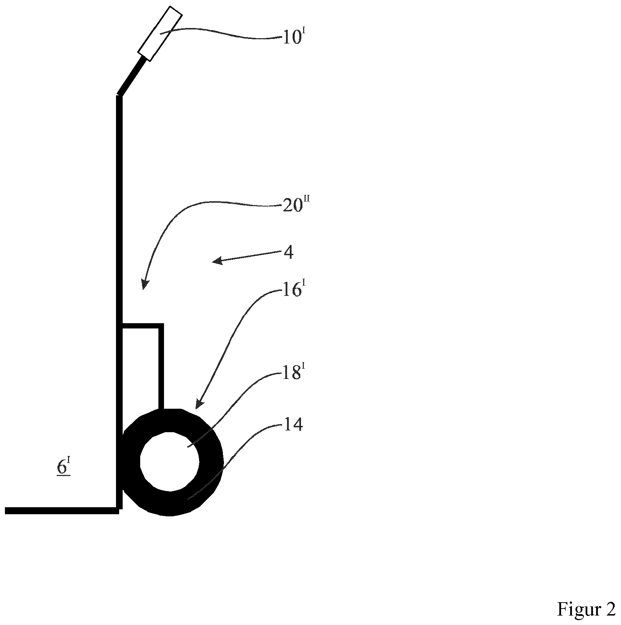

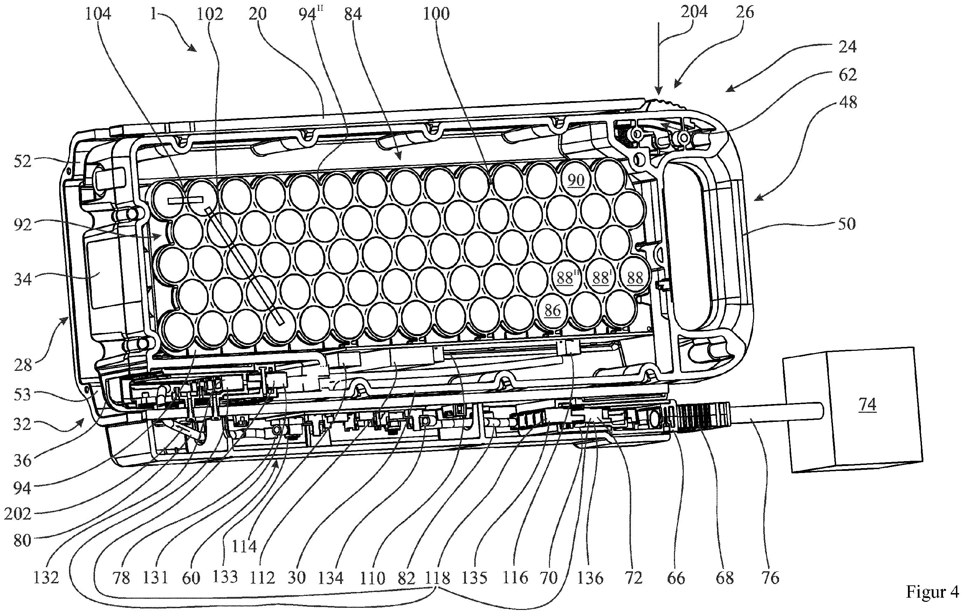

Die Figur 3 und die Figur 4 zeigen in zwei unterschiedlichen Ansichten ein Energiespeicher- und -versorgungssystem 1. Ein solches Energiespeicher- und -versorgungssystem 1 kann zur Energieversorgung eines Lastentransportvehikels 2 wie einem Lastenfahrrad (siehe Fig. 1) oder eines Lastentransportvehikels 4 wie einer Sackkarre (siehe Fig. 2), insbesondere seines (Hilfs-)Antriebs an einem solchen Lastentransportvehikel 2, 4 angebracht werden.

Das in Figur 1 gezeigte Lastenfahrrad 2 umfasst u. a. einen Lastenbereich 6, einen Sattel 8, auf dem ein Fahrer aufsitzen kann, einen Lenker 10, der links und rechts jeweils einen Handgriff hat, und zwei (Hinter-)Räder 12, 12^{I}. Dort, wo sich der Lastenbereich 6 befindet, ist ein Schacht 20^{I} vorhanden. Dieser Schacht 20^{I} kann auch mehrfach an dem Lastenfahrrad 2 montiert sein. Der Schacht 20^{I} ist dafür vorgesehen, Teil eines Energiespeichers 22 (siehe z. B. Fig. 3) zu sein. Die Energie des Energiespeichers 22 kann über Kabel bzw. Litzen eines Kabels (vgl. Fig. 4) zu einem Antriebsmotor 16 geführt werden, der über eine Antriebsnabe 18 zumindest eines der Räder 12, 12^{I} antreiben kann.

Die in Figur 2 gezeigte Sackkarre 4 hat ebenfalls einen Lastenbereich 6^{I}, der sich im Nahbereich zu dem Rad 14 befindet. Über den Lenker 10^{I} mit entsprechendem Griff kann die Sackkarre 4 abgekippt werden. Damit eine Fortbewegung der Sackkarre 4 für einen Nutzer (nicht eingezeichnet) erleichtert wird, gibt es einen Antriebsmotor 16^{I}, der eine Antriebsnabe 18^{I} antreibt, wobei die Antriebsnabe 18^{I} das Rad 14 kraftunterstützend mit antreiben kann. Ein Teil der Fortbewegungsenergie wird über den Lenker 10^{I} auf das Rad 14 eingebracht. Ein weiterer Teil der Energie, der für die Fortbewegung genutzt wird, wird aus dem Schacht 20^{II}, in dem ein aufgeladener Akkumulator (in der Ansicht nicht zu sehen) steckt, zur Verfügung gestellt.

In den Figuren 3 und 4 ist das Energiespeicher- und -versorgungssystem 1 in einer Draufsicht von unten (siehe Figur 3) und in einer Schnittansicht (ebenfalls in der unteren Halbschale geschnitten) dargestellt.

Das Energiespeicher- und -versorgungssystem 1 setzt sich aus einem Schacht 20 und einem Akkumulator 24 zusammen. Solange die Verriegelung 62, die in dem Griff 48 des Akkumulators 24 integriert ist, nicht den Akkumulator 24 mit dem Schacht 20 arretiert hat, können Schacht 20 und Akkumulator 24 relativ zueinander in Schub- bzw. Zugrichtung 200 bewegt werden. Teil des Schachtes 20 ist das Kompartiment 60. Das Kompartiment 60 ist seitlich an dem eigentlichen Schacht 20 angebracht. Der Schacht 20 hat vier Eckbereiche 38, wodurch der eingeschobene Akkumulator 24 links und rechts seiner Breitseiten eingefasst ist. Der Akkumulator 24 hat eine erste Seite 26 und eine zweite Seite 28. Im Bereich der ersten Seite 26 des Akkumulators 24 befindet sich der Griff 48 mit seiner Grifffläche 50. Unter dem Griff 48, an einer Wand des Akkumulators 24 befindet sich die Bedienfläche 44 mit einer Betriebszustandsanzeige 46, die durch mehrere LEDs realisiert ist. Auch gehört zu der Bedienfläche 44 ein Einschaltknopf 42. Der Energiespeicher 22, der dadurch besonders sicher ist, dass der Akkumulator 24 in der eingeschobenen Position an drei Seiten durch den Schacht 20 eingeschlossen ist, hat in seiner arretierten Position, wenn die Verriegelung 62 gegriffen hat, eine rundum gesicherte, explosionsgeschützte Position aufgrund des metallenen Gehäuses des Schachts 20. Eine Seite ist jedoch partiell offen, wodurch Druckwellen kontrolliert in eine Richtung, nämlich in die offene Richtung des Schachts abgebaut werden können.

Soll der Akkumulator 24 aus dem Schacht 20 entlang der Zugrichtung 200 herausgezogen werden, muss der Auslöser 64 durch die Querkrafteinleitung 204 zur Auslösung gebracht werden.

Der Akkumulator 24 hat vier Hinterzüge 36. Die Hinterzüge 36 sind in ihrer Form auf die Führungsflächen 51, 52, 54 abgestimmt.

Der Akkumulator 24 setzt sich aus Halbschalen 34 zusammen, zu denen die Gehäuseteilung 40 zu erkennen ist. Das Akkumulatorgehäuse 30 des Akkumulators 24 hat somit zwei Halbschalen 34.

Das Kompartiment 60 ist ein Ladesteckerkompartiment, an das ein Ladegerät 74 über ein Ladekabel 76 angeschlossen werden kann. Ein Ladestecker 72 kann in die Ladebuchse 70 hineingesteckt werden. Liefert das Ladegerät 74 einen Strom über das Ladekabel 76 in das Kompartiment 60 hinein, so kann anderen Endes des Kompartiments 60 der Strom herausfließend zu dem Akkumulator 24 weiterfließen.

Die in Figur 4 gezeigte Schnittansicht des Akkumulators 24 zeigt zahlreiche Komponenten, wie die als Rundzellen 86, 88, 88^{I}, 88^{II} ausgestalteten Akkumulatorzellen, die zum Teil durch eine serielle Verschaltung 102 und zum Teil durch parallele Verschaltungen 104 untereinander verbunden sind. Die Akkumulatorzellen wie die Akkumulatorzelle 86 sind Lithium-Ionen-Zellen. Mit anderen Worten, alle Zellen 86, 88, 88^{I}, 88^{II} sind Rundzellen auf Lithium-Ionen-Basis mit einer Zellenbasis 90 und einer jeweiligen Mantelfläche 92. Die Rundzellen 88, 88^{I}, 88^{II} sind zu einem Array 84 im Inneren des Akkumulatorgehäuses 30 des Akkumulators 24 elektrisch verbunden und stellen die eigentlichen elektrochemischen Speicher des Energiespeicher- und -versorgungssystems 1 dar. Das Array 84 aus Akkumulatorzellen 86, 88, 88^{I}, 88^{II} wird durch Füllstücke 94, 94^{I}, 94^{II} im Inneren des Akkumulatorgehäuses 30 in Lage gehalten. Die Akkumulatorzellen 86, 88, 88^{I}, 88^{II} sind mit ihren Zellenbasen 90 in Schubrichtung 200 (siehe Figur 3) ausgerichtet. Somit befinden sich die Mantelflächen 92 der Akkumulatorzellen 86, 88, 88^{I}, 88^{II} (im Wesentlichen) im rechten Winkel zu den Führungsflächen, wie der zweiten Führungsfläche 52 und der dritten Führungsfläche 53. Die Füllstücke 94, 94^{I}, 94^{II} bestimmen den Zellenabstand 100 zwischen den Akkumulatorzellen 86, 88, 88^{I}, 88^{II}.

Das Akkumualtorgehäuse 30 setzt sich aus zwei Halbschalen, wie der Halbschale 34, zusammen. Die Halbschalen 34 sind so geformt, dass Teil des Akkumulatorgehäuses 30 der Griff 48 mit seiner Grifffläche 50 ist. Außerdem hat das Akkumulatorgehäuse 30 einen Hohlraum, in dem die Verriegelung 62 eingebaut ist. Die Verriegelung 62 befindet sich zusammen mit dem Griff 48 an der ersten Seite 26 des Akkumulators 24. Durch eine Querkrafteinleitung 204 kann der Auslöser 64 der Verriegelung 62 (vgl. auch Figur 3) in den Hohlraum, der in den Griff 48 übergeht, hineingedrückt werden. Dadurch wird das Akumulatorgehäuse 30 von dem Schacht 20 gelöst.

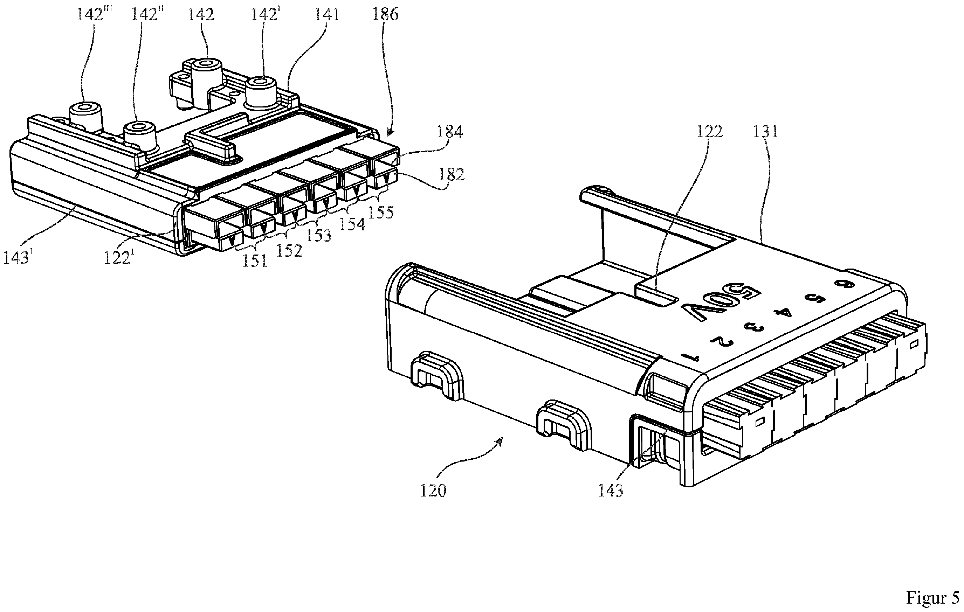

Die zweite Seite 28 des Akkumulators 24 hat in ihrem außermittigen Bereich 32, der ein Gehäuseendbereich ist, einen ersten Stecker 131. Befindet sich der Akkumulator 24 in der arretierten, eingeschobenen Position, so steckt der erste Stecker 131 mit dem zweiten Stecker 132 elektrisch leitend zusammen. Der zweite Stecker 132 ist der erste Gegenstecker 141 (vgl. Figur 5).

Zur besseren Darstellung und leichteren Erkennbarkeit sind die Bereiche der Akkumulatorelektronik 110, die Stecker 131, 132, 133, 134, 135, 136, der Gegenstecker 141 sowie das Kabel 80 vereinfacht, insbesondere nicht vollständig bestückt, dargestellt.

Das Akkumulatorgehäuse 30 des Akkumulators 24 hat Hinterzüge 36, die in ihrer Form auf die einbuchtende Gestalt der Führungsflächen 52, 53, abgestimmt sind. Aufgrund des Hinterzugs 36 hat das Akkumulatorgehäuse 30 des Akkumulators 24 in seinen Randbereichen eine geringere Höhe.

Die Akkumulatorelektronik 110 weist elektronische Schalter 112 auf. Teil der Akkumulatorelektronik 110 ist die Schnittstelle 114. Zu der Schnittstelle 114 wird auch das Treiber-IC 116 der Akkumulatorelektronik 110 gezählt. Aufgrund der elektronischen Schalter 112 kann der erste Stecker 131 spannungslos und stromlos geschaltet werden. In dem Kompartiment 60, das als Ladesteckerkompartiment zur Verfügung steht, ist eine weitere Elektronik, die über elektrische Verbindungen 78 bzw. über einen Kabelbaum 82 mit den weiterführenden Steckern 132, 135 verbunden ist. In dem Ladesteckerkompartiment 60 finden Spannungsumsetzungen, gegebenenfalls Stromumsetzungen, Strombegrenzungen und Ladestromregelungen statt.

Die Steckerbuchse 70, an die ein Ladegerät 74 über ein Ladekabel 76 angeschlossen werden kann, hat einen Schachtdeckel 66, der auch als Kompartimentdeckel 66 bezeichnet werden kann, und der im regulären Betrieb des Akkumulators 24 die Steckerbuchse 70 vor Umwelteinflüssen wie Feuchtigkeit und Dreck schützt. Von dem Ladegerät 74 über das Ladekabel 76 führt durch den Schachtdeckel 66 eine elektrische Verbindung auf den Ladestecker 72. Durch angreifen an dem Deckelgriff 68 kann das Ladekabel 76 und somit das Ladegerät 74 von dem Kompartiment 60 und damit von dem Energiespeicher 22 abgekoppelt und das Kompartiment 60 blinddeckelartig verschlossen werden.

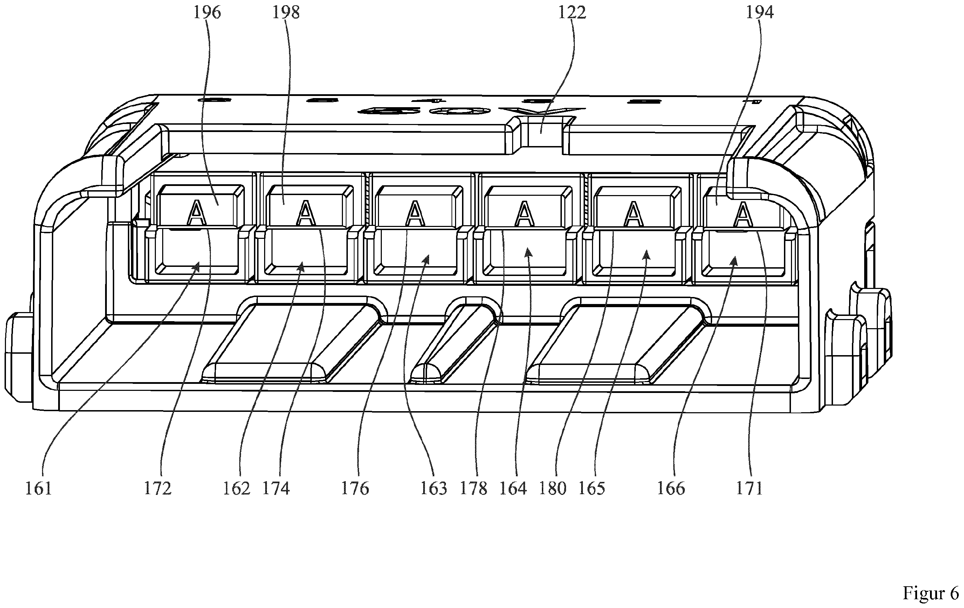

Wie aus der Darstellung der Figur 4 besonders gut zu entnehmen ist, umfasst das Stecksystem 118 eine ganze Serie gleichartiger Stecker 131, 132, 133, 134, 135, 136. Die Stecker haben alle die gleichen Kontakte 161, 162, 163, 164, 165, 166 (vgl. Figur 6). Der Stromfluss 202 soll im Ladefall von dem Ladegerät 74 über das Ladekabel 76 durch das Kompartiment 60 über Kabel wie das Kabel 80 bzw. den Kabelbaum 82 in die Akkumulatorzellen 86, 88, 88^{I}, 88^{II} des Arrays 84 des Akkumulators 24 fließen.

Der in Figur 4 gezeigte erste Stecker 131 wird zusammen mit seinem Gegenstecker 141 in auseinandergezogener Darstellung in Figur 5 gezeigt. Wird der Akkumulator nach Figur 3 bzw. Figur 4 in den Schacht 20 hineingeschoben, so nähern sich Stecker 131 und Gegenstecker 141 (siehe Figur 5) immer weiter aneinander an, bis die beiden Stecker, Stecker 131 und Gegenstecker 141 ihre männlichen Bereiche 182 und weiblichen Bereiche 184 ineinander verschränkt eingefügt haben. Erst dann ist ein elektrischer Kontakt zu dem Array 84, genauer seinen Akkumulatorzellen 86, 88, 88^{I}, 88^{II} des Akkumulators 24 hergestellt. Zuvor ist eine Berührung der leitenden Teile der Einzelkontakte 186 nicht möglich.

Aus Figur 5 ist sehr gut zu entnehmen, dass erster Stecker 131 und sein Gegenstecker 141 Flachstecker 120 sind, die, wie anhand der umlaufenden Naht 143, 143^{I} zu erkennen ist, verschweißte Kunststoffstecker sind. Jeder der beiden Stecker 131, 141 hat sechs Einzelkontakte wie der Einzelkontakt 186, die alle untereinander in Bezug auf ihre Abmessungen, Proportionen und mechanischen Ausgestaltungen identisch sind. Dadurch ergibt sich, dass die Kontaktrasterabstände 151, 152, 153, 154, 155 alle gleich sind. Jeder Kontaktrasterabstand 151, 152, 153, 154, 155 liegt bei einem Wert zwischen 7 mm und 9 mm, bei dem Stecker nach Figur 5 bei exakt 7,62 mm.

Damit der Gegenstecker 141 an den Schacht 20 (siehe Figur 4) fixiert angebracht werden kann, sind Teil des Gegensteckers 141 die Befestigungshülsen 142, 142^{I}, 142^{II}, 142^{III}.

Jeder der beiden Stecker 131, 141 hat eine Passform 122, 122^{I}, wodurch eine Spannungskodierung ausgedrückt wird. Dadurch wird sichergestellt, dass nicht ein nicht passender Akkumulator 24 in einen Schacht 20 unter Ausbildung elektrischer Leitungsverbindungen eingeschoben werden kann.

Aufgrund der Identität der Einzelkontakte 186 sowohl im Stecker 131 als auch im Gegenstecker 141 sind alle Einzelkontakte als berührungssichere, polungsunabhängige und stromflussrichtungsunabhängige Kontakte ausgeführt. Über die Befestigungshülsen 142, 142^{I}, 142^{II}, 142^{III} kann der Gegenstecker 141 an einer Innenseite des Schachts 20 (vgl. Figur 4) angeschraubt oder angeklebt werden. Ein solcher Stecker kann in einem Endbereich des Schacht 20, wie in Figur 4 dargestellt, platziert werden.

Durch eine gemeinsame Betrachtung der Figuren 4 und 5 ergibt sich, dass über den Stecker 131 sowohl Leistungsflüsse als auch Datenkommunikationen an die Schnittstelle 114 zu übertragen sind.

In Figur 6 sind die Kontakte 161, 162, 163, 164, 165, 166 (also sechs Kontakte 161, 162, 163, 164, 165, 166) in einer im wesentlichen Frontalansicht dargestellt. Jeder Kontakt 161, 162, 163, 164, 165, 166 hat frontseitig einen Berührungsschutz 194, 196, d. h. auf der Stirnfläche 198.

Am Rande der in einer Ebene, nebeneinander aufgereihten Kontakte 161, 162, 163, 164, 165, 166 sind Energiekontakte 171, 172 angesiedelt. Zwischen den Energiekontakten 171, 172 sind die Steuersignalkontakte 174, 176 platziert. Solche Steuersignalkontakte 174, 176 können als Kontakte 178, 180 für eine serielle Kommunikation ausgestaltet sein.

Darüber hinaus hat der Stecker nach Figur 6 eine Passform 122 als Kodierung eingearbeitet.

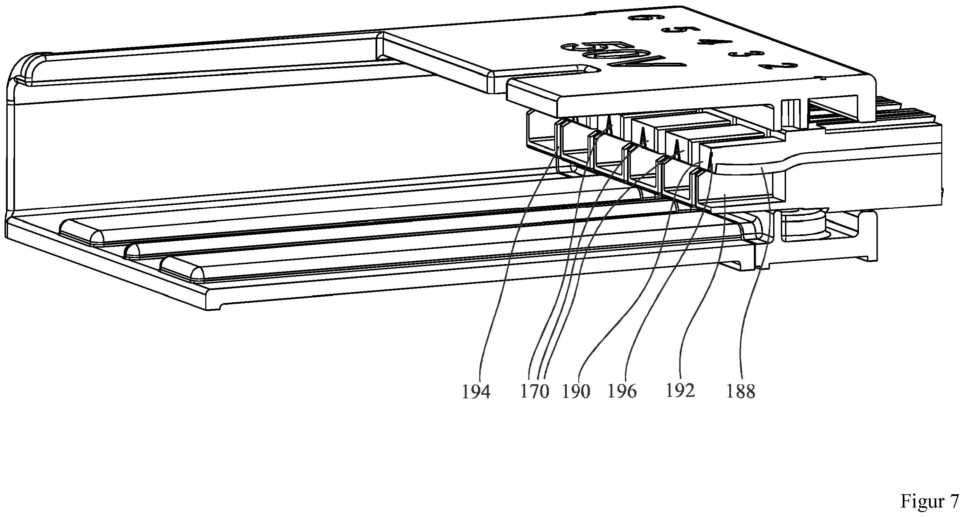

Aus Figur 7 ist der in Figur 6 dargestellte Berührschutz 194, 196 besonders gut zu entnehmen, weil die Kontaktsumme 188 in dem quaderförmigen Aufnahmebereich 190 nicht bis zur gemeinsamen Ebene 170 reicht. Nur über den prismatischen Aufnahmebereich 192 können die Kontaktzungen wie die Kontaktzunge 188 berührt werden.

Die in den einzelnen Figuren gezeigten Ausgestaltungsmöglichkeiten lassen sich auch untereinander in beliebiger Form verbinden.

So ist es möglich, einen Energiespeicher an einem Rahmen des Transportvehikels zu befestigen und einen Energiespeicher an einer Wanne eines Transportbereichs zu befestigen.

Genauso ist es möglich, die auf zwei Elektronik-Platinen verteilten elektronischen Steuerungen auf mehr als zwei Elektronik-Platinen zu verteilen.

Das Gehäuse des Akkumulators kann auf die Anzahl der Akkumulatorzellen abgestimmt werden, d. h., bei weniger einzufassenden Akkumulatorzellen kann das Gehäuse insgesamt kürzer gestaltet sein. Sind mehr Akkumulatorzellen in der Schale des Akkumulatorgehäuses anzuordnen, kann das Gehäuse etwas länger ausgeführt werden.

Die Akkumulatorzellen können untereinander in vielerlei Art und Weise verschlatet sein. Wird ein besonders hoher Strom benötigt, können mehr Akkumulatorzellen parallel verschaltet werden. Wird eine besonders hohe Spannung verlangt, können mehr Akkumulatorzellen in Serie verschaltet sein.

### Bezugszeichenliste

- 1: Energiespeicher- und -versorgungssystem
- 2: Lastentransportvehikel, insbesondere Lastenfahrrad
- 4: Lastentransportvehikel, insbesondere Treppensteiger bzw. Sackkarre
- 6,6^{I}: Lastenbereich
- 8: Sattel
- 10, 10^{I}: Lenker, insbesondere mit Haltegriffen
- 12, 12^{I}: Rad
- 14: Rad
- 16, 16^{I}: Antriebsmotor
- 18, 18^{I}: Antriebsnabe
- 20, 20^{I}, 20^{II}: Schacht
- 22: Energiespeicher
- 24: Akkumulator
- 26: erste Seite des Akkumulators
- 28: zweite Seite des Akkumulators
- 30: Akkumulatorgehäuse, insbesondere schalenförmiges Gehäuse
- 32: außermittiger Bereich, insbesondere Gehäuseendbereich
- 34: Halbschale
- 36: Hinterzug
- 38: Eckbereich
- 40: Gehäuseteilung
- 42: Einschaltknopf
- 44: Bedienfläche
- 46: Betriebszustandsanzeige, insbesondere LED
- 48: Griff, insbesondere Handgriff
- 50: Grifffläche
- 51: erste Führungsfläche
- 52: zweite Führungsfläche
- 53: dritte Führungsfläche
- 54: vierte Führungsfläche
- 60: Kompartiment, insbesondere Ladesteckerkompartiment
- 62: Verriegelung
- 64: Auslöser, insbesondere zur Querkrafteinleitung
- 66: Schachtdeckel, insbesondere Kompartimentdeckel
- 68: Deckelgriff
- 70: Steckerbuchse, insbesondere Ladesteckerbuchse
- 72: Stecker, insbesondere Ladestecker
- 74: Ladegerät
- 76: Ladekabel
- 78: elektrische Verbindung
- 80: Kabel, insbesondere zu dem ersten Stecker
- 82: Kabelbaum
- 84: Array aus Akkumulatorzellen
- 86: Akkumulatorzelle, insbesondere Lithiumionenzelle
- 88, 88^{I}, 88^{II}: Akkumulatorzelle, insbesondere elektrochemische Rundzelle
- 90: Zellenbasis
- 92: Mantelfläche
- 94, 94^{I}, 94^{II}: Füllstück
- 100: Zellenabstand
- 102: serielle Verschaltung
- 104: parallele Verschaltung
- 110: Akkumulatorelektronik
- 112: elektronischer Schalter
- 114: Schnittstelle
- 116: Treiber-IC
- 118: Stecksystem
- 120: Kunststoffflachstecker
- 122, 122^{I}: Passform
- 131: erster Stecker
- 132: zweiter Stecker
- 133: dritter Stecker
- 134: vierter Stecker
- 135: fünfter Stecker
- 136: sechster Stecker
- 141: erster Gegenstecker
- 142, 142^{I},: Befestigungshülse
- 142^{II}, 142^{III} 143, 143^{I}: Schweißnaht
- 151: erster Kontaktrasterabstand
- 152: zweiter Kontaktrasterabstand
- 153: dritter Kontaktrasterabstand
- 154: vierter Kontaktrasterabstand
- 155: fünfter Kontaktrasterabstand
- 161: erster Kontakt, insbesondere Kontaktfläche
- 162: zweiter Kontakt, insbesondere Kontaktfläche
- 163: dritter Kontakt, insbesondere Kontaktfläche
- 164: vierter Kontakt, insbesondere Kontaktfläche
- 165: fünfter Kontakt, insbesondere Kontaktfläche
- 166: sechster Kontakt, insbesondere Kontaktfläche
- 170: gemeinsame Ebene
- 171: erster Energiekontakt
- 172: zweiter Energiekontakt
- 174: erster Steuersignalkontakt
- 176: zweiter Steuersignalkontakt
- 178: erster Kontakt für serielle Kommunikation
- 180: zweiter Kontakt für serielle Kommunikation
- 182: männlicher Bereich
- 184: weiblicher Bereich
- 186: Einzelkontakt
- 188: Kontaktzunge
- 190: quaderförmiger Aufnahmebereich
- 192: prismatischer Aufnahmebereich
- 194: erster Berührungsschutz
- 196: zweiter Berührungsschutz
- 198: Stirnseite, insbesondere des Berührungsschutzes
- 200: Schubrichtung bzw. Zugrichtung
- 202: Stromfluss
- 204: Querkrafteinleitung

## Patentansprüche

1. Energiespeicher (1, 22) für elektrische Energie
mit einem Schacht (20, 20^{I}, 20^{II}) und
mit einem auf den Schacht (20, 20^{I}, 20^{II}) abgestimmten, schiebbaren Akkumulator (24), der sich aus einem untereinander elektrisch verbundenen Array (84) aus Akkumulatorzellen (88, 88^{I}, 88^{II})
im Inneren eines Gehäuses (30, 34) zusammensetzt,
und mit einem Stecksystem (118) umfassend mehrere Stecker (131, 132, 133, 134, 135, 136, 141),
**dadurch gekennzeichnet, dass**
das Gehäuse (30, 34) schalenförmig und als Gesamtgehäuse aus zwei oder mehreren Teilgehäusen zusammengefügt ist,
wobei zumindest ein erster Stecker (131) auf einer Seite des Gehäuses (30, 34) ein Kontakte (161, 162, 163, 164, 165, 166) für elektrische Energie und Steuersignale vereinigender Stecker (131) mit wenigstens fünf oder sechs Kontaktrasterabständen (151, 152, 153, 154, 155) ist,
wobei Kontaktflächen (161, 162, 163, 164, 165, 166) des ersten Steckers (131) eine gemeinsame Ebene (170) aufspannen.

2. Energiespeicher (1, 22) nach Anspruch 1,
**dadurch gekennzeichnet, dass**
ein Gegenstecker (141) des Stecksystems (118) auf einer Innenseite des Schachts (20, 20^{I}, 20^{II}), vorzugsweise am Rande eines Endbereichs des Schachts (20, 20^{I}, 20^{II}), befestigt ist.

3. Energiespeicher (1, 22) nach einem der vorhergehenden Ansprüche,
**dadurch gekennzeichnet, dass**
zumindest der erste Stecker (131), vorzugsweise der erste Stecker (131) und sein Gegenstecker (141), mit berührungssicheren, vorzugsweise polungsunabhängigen und/oder stromflussrichtungsunabhängigen, Kontakten (161) ausgestattet ist, vorzugsweise alle Kontakte (161, 162, 163, 164, 165, 166) zumindest des ersten Steckers (131), insbesondere alle Kontakte (161, 162, 163, 164, 165, 166) aller Stecker, (131, 141) polungsunabhängige und insbesondere stromflussrichtungsunabhängige Kontakte (161, 162, 163, 164, 165, 166) haben.

4. Energiespeicher (1, 22) nach einem der vorhergehenden Ansprüche,
**dadurch gekennzeichnet, dass**
neben dem Schacht (20, 20^{I}, 20^{II}) ein Kompartiment (60) angeordnet ist, das als Ladesteckerkompartiment (60) sich entlang des in dem Schacht (20, 20^{I}, 20^{II}) befindlichen Akkumulators (24) erstreckt,
wobei das Kompartiment (60) vorzugsweise zur Bildung einer elektrischen Verbindung (78) über ein Kabel (80) zu dem ersten Stecker (131),
insbesondere unter Zwischenschaltung des Gegensteckers (141) des ersten Steckers (131),
gestaltet ist,
und wobei insbesondere ein Ladebetriebszustand (46) des Akkumulators (24) über elektrische Kontakte (161, 162, 163, 164, 165, 166) zur Leitung elektrischer Ladeflüsse mit Hilfe des Kompartiments (60) herstellbar ist.

5. Energiespeicher (1, 22) nach einem der vorhergehenden Ansprüche,
**dadurch gekennzeichnet, dass**
eine krafteinleitende, seitlich angeordnete Verriegelung (62) zur Arretierung des Akkumulators (24) im Schacht (20, 20^{I}, 20^{II}) vorhanden ist,
die vorzugsweise durch eine Querkrafteinleitung (204) mit einer Kraft im einstelligen Newton-Bereich lösbar ist.

6. Energiespeicher (1, 22) nach einem der vorhergehenden Ansprüche,
**dadurch gekennzeichnet, dass**
in einem Frontbereich,
vorzugsweise in Nachbarschaft zur Grifffläche (50),
ein abnehmbarer Schachtdeckel (66), vorzugsweise mit einem Deckelgriff (68), an dem Energiespeicher (1, 22) vorhanden ist, hinter dem eine Steckerbuchse (70) oder ein Stecker (72) zugänglich ist,
über die bzw. den der Akkumulator (24) im eingesteckten Zustand vorzugsweise mittels einer an die Steckerbuchse (70) oder den Stecker (72) anschließbaren Stromquelle, wie ein Ladegerät (74), aufladbar ist.

7. Energiespeicher (1, 22) nach einem der vorhergehenden Ansprüche,
**dadurch gekennzeichnet, dass**
der Stecker (131) elektrische Kontakte (171, 172) für Energie im Bereich wenigstens einer Außenseite des Steckers (131) aufweist,
wobei vorzugsweise die Kontakte (171, 172) für Energie und Kontakte (174, 176) für Steuersignale in einem Kontaktraster (151, 152, 153, 154, 155) mit einem wiederholenden Maß mit einem Abstand zwischen 7 mm und 8 mm angeordnet sind, wobei ein Kontakt (174, 176) für Steuersignale zwischen den Kontakten (171, 172) für Energie angeordnet ist, wobei letztere Kontakte wenigstens fünf Kontaktrasterabstände (151, 152, 153, 154, 155) auseinanderliegen.

8. Energiespeicher (1, 22) nach einem der vorhergehenden Ansprüche,
**dadurch gekennzeichnet, dass**
der Stecker (131) ein ultraschallverschweißter Kunststoffflachstecker (120) ist und insbesondere eine Passform (122, 122^{I}) aufweist, wobei die Passform (122, 122^{I}) eine Kodierung eines Typenspannungswerts des Energiespeichers (1,22), wie eine Maximalladespannung, ist.

9. Energiespeicher (1, 22) nach einem der vorhergehenden Ansprüche,
**dadurch gekennzeichnet, dass**
jeder Kontakt (161, 162, 163, 164, 165, 166) eines Steckers (131, 141) einen männlichen Bereich (182) und einen weiblichen Bereich (184) umfasst,
wobei vorzugsweise ein Kontakt (161, 162, 163, 164, 165, 166) im Wesentlichen hälftig geteilt in seinen männlichen Bereich (182) und in seinen weiblichen Bereich (184) unterteilt ist.

10. Energiespeicher (1, 22) nach einem der vorhergehenden Ansprüche,
**dadurch gekennzeichnet, dass**
zumindest der erste Stecker (131), vorzugsweise alle Stecker (141) des Stecksystems (118), separierbare bzw. räumlich abschließbare Einzelkontakte (186) hat, von denen jeder der Einzelkontakte (186) eine federnde, die Kontaktfläche (161, 162, 163, 164, 165, 166) ausbildende elektrisch leitfähige Kontaktzunge (188), wie eine Kupfer-Zunge, eine verzinnte Zunge oder eine vergoldete Zunge, aufweist, wobei unmittelbar an einer ersten Seite der Kontaktzunge (188) ein quaderförmiger Aufnahmebereich (190) und an einer gegenüberliegenden zweiten Seite der Kontaktzunge (188) ein prismatischer, U-förmiger Aufnahmebereich (192), jeweils zur Aufnahme eines Berührungsschutzes (194, 196), vorhanden ist, sodass insbesondere eine elektrische Leitfähigkeit des Einzelkontaktes (186) nur an einer innenliegenden Stirnseite (198) eines Berührungsschutzes (194, 196) ausbildbar ist.

11. Energiespeicher (1, 22) nach einem der vorhergehenden Ansprüche,
**dadurch gekennzeichnet, dass**
der Akkumulator (24) mit einer Sicherung und die Akkumulatorelektronik (110) mit, insbesondere elektronischen, Schaltern (112),
insbesondere als Teil der Akkumulatorelektronik (110),
zusammenarbeitet,
durch die ein Stromfluss (202) zu und/oder von dem ersten Stecker (131) unterbrechbar ist.

12. Energiespeicher (1, 22) nach einem der vorhergehenden Ansprüche,
**dadurch gekennzeichnet, dass**
der erste Stecker (131) mit Kontakten (178, 180) für eine serielle Kommunikation, insbesondere für eine Kommunikation nach einem CAN-Bus-Protokoll, ausgestattet ist und vorzugsweise die Akkumulatorelektronik (110) eine Schnittstelle (114) mit einem Treiber-IC (116) für eine serielle Kommunikation wie eine CAN-Bus-Kommunikation umfasst,
die über einen Kabelbaum an die Kontakte (178, 180) für die serielle Kommunikation angeschlossen ist.

13. Energiespeicher (1, 22) nach einem der vorhergehenden Ansprüche,
**dadurch gekennzeichnet, dass**
die Akkumulatorzellen (88, 88^{I}, 88^{II}) des Arrays (84) Lithiumionenzellen (86) sind und/oder insbesondere der Energiespeicher (1, 22) als Energiequelle für einen elektromotorischen Antrieb (16, 16^{I}), vorzugsweise eines Lastentransportvehikels (2, 4), wie eines Lastenfahrrads (2), eines Treppensteigers (4), einer Lastenkarre, eines Hubwagens oder einer Sackkarre (4) ausgebildet ist.

14. Energiespeicher (1, 22) nach einem der vorhergehenden Ansprüche,
**dadurch gekennzeichnet, dass**
der Energiespeicher (1, 22) eine Akkumulatorelektronik (110) aufweist,
mit der zumindest einer der Akkumulatorparameter Temperatur, Spannung oder Strom messbar ist, insbesondere mit der eine Temperatur einer Akkumulatorzellen-Oberfläche (90, 92), einer exemplarischen Akkumulatorzellen-Umgebungstemperatur, eines Satzes aus Temperaturen von Akkumulatorzellen-Oberflächen (90, 92) und/oder von Akkumulatorzellen-Umgebungstemperaturen, einer Akkumulatorzellen-Spannung, einer Gesamtspannung des Arrays (84) und/oder eines Gesamtstroms des Arrays (84) messbar ist.

15. Energiespeicher (1, 22) nach einem der vorhergehenden Ansprüche,
**dadurch gekennzeichnet, dass**
der Energiespeicher (1, 22) eine den Akkumulator (24) einseitig abschließende Grifffläche (50) hat,
die einem der Stecker (131, 132, 141), insbesondere einem ersten Stecker (131), an einer entgegengesetzten Seite (26) des Gehäuses (30) gegenüberliegt und zu der quer ausgerichtet Führungsflächen (51, 52, 53, 54) an dem Gehäuse (30) verlaufen.

16. Akkumulator (24),
der eine Grifffläche (50),
und mehrere Führungsflächen (51, 52) aufweist,
wobei der Akkumulator (24) parallel verschaltete (104) und/oder hintereinander verschaltete (102), elektrochemische Stromspeicher (88, 88^{I}, 88^{II}) umfasst,
**dadurch gekennzeichnet, dass**
der Akkumulator (24) einen Stecker (131) aufweist und
die Stromspeicher (88, 88^{I}, 88^{II}) in paralleler Ausrichtung von dem an einer Seite (32) eines Gehäuses (30) des Akkumulators (24) angeschlossenen, einzigen Stecker (131) mit mehr als vier Kontakten (161, 162, 163, 164, 165, 166) begrenzt sind,
wobei das Gehäuse (30) aus zwei oder mehreren Teilgehäusen zusammengesetzt ist.

17. Akkumulator (24) nach dem vorhergehenden Anspruch,
**dadurch gekennzeichnet, dass**
das Gehäuse (30) des Akkumulators (24) aus,
insbesondere in Kunststoffspritzgießtechnik hergestellten,
Halbschalen (34) mit Hinterzügen (36) in den Eckbereichen (38) gebildet ist, wodurch eine Gehäuseteilung (40) in der Grifffläche (50),
insbesondere in einem Griff (48) der Grifffläche (50),
quer zur vorgesehenen Schubrichtung (200) verläuft.

18. Akkumulator (24) nach Anspruch 16 oder 17,
**dadurch gekennzeichnet, dass**
eine Stromspeicherfähigkeit durch einen Zusammenschluss von Lithium-Ionen-Akkumulatorzellen (86), insbesondere von Rundzellen (86, 88, 88^{I}, 88^{II}) mit einer runden Basis (90) zwischen 18 mm und 21 mm, geschaffen ist,
wobei vorzugsweise ihre Mantelflächen (92),
die durch vorteilhafterweise nur in den Randbereichen der Mantelflächen (92) vorhandene, hülsenartige Füllstücke (94, 94^{I}, 94^{II}) auf Abstand (100) gehalten werden, parallel zueinander ausgerichtet sind.

19. Akkumulator (24) nach einem der drei vorhergehenden Ansprüche,
**dadurch gekennzeichnet, dass**
die Grifffläche (50) in Gestalt eines Griffes (48) ein vorgelagertes,
insbesondere nachfolgende Bereiche (42, 44, 46) des Gehäuses (30) schützendes, Teil ist,
das einem Einschaltknopf (42) und/oder einer Bedienfläche (44) vorgelagert ist, wobei insbesondere der Griff (48) und der Einschaltknopf (42) und/oder die Bedienfläche (44) in einer gleichen Ebene in Bezug auf die Schubrichtung (200) angeordnet sind.

20. Akkumulator (24) nach einem der Ansprüche 16 bis 19,
**dadurch gekennzeichnet, dass**
der Stecker (131) als Zentralstecker zu bezeichnen ist, der vorzugsweise außermittig auf der Seite (32) des Akkumulators (24) angeordnet ist, wobei insbesondere der Akkumulator (24) geeignet ist, ein Teil eines Energiespeichers (1, 22) nach einem der Ansprüche 1 bis 15 zu bilden.

## Claims

1. Energy storage device (1, 22) for electrical energy,
comprising a shaft (20, 20^{I}, 20^{II}), and
comprising a slidable accumulator (24) which is adapted to the shaft (20, 20^{I}, 20^{II}), said accumulator being composed of an electrically interconnected array (84) of accumulator cells (88, 88^{I}, 88^{II})
in the interior of a housing (30, 34),
and comprising a push-fit system (118) comprising a plurality of connectors (131, 132, 133, 134, 135, 136, 141),
**characterized in that**
the housing (30, 34) is shell-like and as an overall housing is assembled from two or more partial housings,
wherein at least a first connector (131) on one side of the housing (30, 34) is a connector (131) which comprises contacts (161, 162, 163, 164, 165, 166) for electrical energy and for control signals, said connector having at least five or six contact pitch spacings (151, 152, 153, 154, 155),
wherein contact areas (161, 162, 163, 164, 165, 166) of the first connector (131) span a common plane (170).

2. Energy storage device (1, 22) according to claim 1,
**characterized in that**
a mating connector (141) of the push-fit system (118) is attached to an inner side of the shaft (20, 20^{I}, 20^{II}), preferably at the edge of an end region of the shaft (20, 20^{I}, 20^{II}).

3. Energy storage device (1, 22) according to any one of the preceding claims,
**characterized in that**
at least the first connector (131), preferably the first connector (131) and its mating connector (141), is equipped with touch-proof, preferably polarity-independent and/or current flow direction-independent, contacts (161),
preferably all contacts (161, 162, 163, 164, 165, 166) at least of the first connector (131), in particular all contacts (161, 162, 163, 164, 165, 166) of all connectors (131, 141), have polarity-independent and in particular current flow direction-independent contacts (161, 162, 163, 164, 165, 166).

4. Energy storage device (1, 22) according to any one of the preceding claims,
**characterized in that**
a compartment (60) is arranged next to the shaft (20, 20^{I}, 20^{II}), said compartment extending as a charging connector compartment (60) along the accumulator (24) located in the shaft (20, 20^{I}, 20^{II}),
wherein the compartment (60) is preferably designed to form an electrical connection (78) to the first connector (131) via a cable (80),
in particular with the interposition of the mating connector (141) of the first connector (131),
and wherein in particular a charging mode state (46) of the accumulator (24) can be established via electrical contacts (161, 162, 163, 164, 165, 166) by means of the compartment (60) in order to conduct electrical charging flows.

5. Energy storage device (1, 22) according to any one of the preceding claims,
**characterized in that**
a laterally positioned lock (62), which applies a force, is provided for arresting the accumulator (24) in the shaft (20, 20^{I}, 20^{II}),
which lock can preferably be released by applying a transverse force (204) in the single-digit Newton range.

6. Energy storage device (1, 22) according to any one of the preceding claims,
**characterized in that**
in a front region,
preferably in proximity of the grip area (50),
a removable shaft cover (66), preferably having a lid handle (68), is arranged on the energy storage device (1, 22), behind which it is possible to access a female connector (70) or a male connector (72),
via which the accumulator (24) in the plugged-in state can be charged preferably by means of a current source, such as a charger (74), which can be connected to the female connector (70) or the male connector (72).

7. Energy storage device (1, 22) according to any one of the preceding claims,
**characterized in that**
the connector (131) has electrical contacts (171, 172) for energy in the region of at least one outer side of the connector (131),
wherein preferably the contacts (171, 172) for energy and contacts (174, 176) for control signals are arranged at a contact pitch (151, 152, 153, 154, 155) of repeating size with a spacing of between 7 mm and 8 mm,
wherein a contact (174, 176) for control signals is arranged between the contacts (171, 172) for energy, the latter contacts being spaced apart by at least five contact pitch spacings (151, 152, 153, 154, 155).

8. Energy storage device (1, 22) according to any one of the preceding claims,
**characterized in that**
the connector (131) is an ultrasonically welded flat connector (120) made of plastic and in particular has a shaped fit (122, 122^{I}), the shaped fit (122, 122^{I}) being a coding for a type voltage value of the energy storage device (1, 22), such as a maximum charging voltage.

9. Energy storage device (1, 22) according to any one of the preceding claims,
**characterized in that**
each contact (161, 162, 163, 164, 165, 166) of a connector (131, 141) comprises a male region (182) and a female region (184),
wherein preferably a contact (161, 162, 163, 164, 165, 166) is divided substantially in half into its male region (182) and its female region (184).

10. Energy storage device (1, 22) according to any one of the preceding claims,
**characterized in that**
at least the first connector (131), preferably all connectors (141) of the push-fit system (118), has individual contacts (186) which can be separated and/or spatially shut off,
each of the individual contacts (186) having a flexible, electrically conductive contact tongue (188), such as a copper tongue, a tin-plated tongue or a gold-plated tongue, which forms the contact area (161, 162, 163, 164, 165, 166), wherein a cuboidal receiving region (190) is provided directly on a first side of the contact tongue (188) and a prismatic, U-shaped receiving region (192) is provided on an opposite second side of the contact tongue (188), each of said receiving regions being provided to receive a touch guard (194, 196) so that in particular an electrical conductivity of the individual contact (186) can be formed only on an inner end face (198) of a touch guard (194, 196).

11. Energy storage device (1, 22) according to any one of the preceding claims,
**characterized in that**
the accumulator (24) cooperates with a fuse and the accumulator electronics (110) cooperate with, in particular electronic, switches (112),
in particular as part of the accumulator electronics (110),
by which a current flow (202) to and/or from the first connector (131) can be interrupted.

12. Energy storage device (1, 22) according to any one of the preceding claims,
**characterized in that**
the first connector (131) is equipped with contacts (178, 180) for serial communication, in particular for communication according to a CAN bus protocol,
and preferably the accumulator electronics (110) comprises an interface (114) with a driver IC (116) for serial communication such as a CAN bus communication, which is connected via a cable harness to the contacts (178, 180) for serial communication.

13. Energy storage device (1, 22) according to any one of the preceding claims,
**characterized in that**
the accumulator cells (88, 88^{I}, 88^{II}) of the array (84) are lithium ion cells (86), and/or in particular the energy storage device (1, 22) is designed as an energy source for an electric motor drive (16, 16^{I}), preferably of a cargo transport vehicle (2, 4), such as a cargo bike (2), a stair climber (4), a cargo cart, a pallet truck or a sack barrow (4).

14. Energy storage device (1, 22) according to any one of the preceding claims,
**characterized in that**
the energy storage device (1, 22) has accumulator electronics (110),
by which at least one of the accumulator parameters temperature, voltage or current can be measured, in particular by which a temperature of an accumulator cell surface (90, 92), an example of an accumulator cell ambient temperature, a set of temperatures of accumulator cell surfaces (90, 92) and/or of accumulator cell ambient temperatures, an accumulator cell voltage, a total voltage of the array (84) and/or a total current of the array (84) can be measured.

15. Energy storage device (1, 22) according to any one of the preceding claims,
**characterized in that**
the energy storage device (1, 22) has a grip area (50) which terminates the accumulator (24) on one side,
said grip area being located opposite one of the connectors (131, 132, 141), in particular a first connector (131), on an opposite side (26) of the housing (30) and towards which transversely oriented guide faces (51, 52, 53, 54) on the housing (30) extend.

16. Accumulator (24),
which has a grip area (50)
and a plurality of guide faces (51, 52),
wherein the accumulator (24) comprises electrochemical power storage units (88, 88^{I}, 88^{II}) connected in parallel (104) and/or connected in series (102),
**characterized in that**
the accumulator (24) has a connector (131), and
the power storage units (88, 88^{I}, 88^{II}) oriented in parallel are bounded by the single connector (131), which is connected to one side (32) of a housing (30) of the accumulator (24) and has more than four contacts (161, 162, 163, 164, 165, 166), wherein the housing (30) is composed of two or more partial housings.

17. Accumulator (24) according to the preceding claim,
**characterized in that**
the housing (30) of the accumulator (24) is formed of half-shells (34),
in particular produced with plastics injection moulding technique,
said half-shells having undercuts (36) in the corner regions (38),
as a result of which a housing split (40) in the grip area (50),
in particular in a handle (48) of the grip area (50),
extends transversely to the intended sliding direction (200).

18. Accumulator (24) according to claim 16 or 17,
**characterized in that**
a power storage capacity is created by an assembly of lithium ion accumulator cells (86), in particular round cells (86, 88, 88^{I}, 88^{II}) having a round base (90) of between 18 mm and 21 mm,
wherein preferably the lateral faces (92) thereof,
which are kept at a distance (100) by sleeve-like filler pieces (94, 94^{I}, 94^{II}) which are advantageously provided only in the edge regions of the lateral faces (92),
are oriented parallel to one another.

19. Accumulator (24) according to any one of the three preceding claims,
**characterized in that**
the grip area (50) in the shape of a handle (48) is an upstream part which in particular protects downstream regions (42, 44, 46) of the housing (30) and which is upstream of a power button (42) and/or a control panel (44),
wherein in particular the handle (48) and the power button (42) and/or the control panel (44) are arranged in the same plane relative to the push direction (200).

20. Accumulator (24) according to any one of claims 16 to 19,
**characterized in that**
the connector (131) is to be designated as the main connector, which is preferably arranged off-centre on the side (32) of the accumulator (24), wherein in particular the accumulator (24) is suitable for forming part of an energy storage device (1, 22) according to any one of claims 1 to 15.

## Revendications

1. Accumulateur d'énergie (1, 22) pour de l'énergie électrique avec un puits (20, 20^{I}, 20^{II}) et avec un accumulateur coulissant (24), adapté au puits (20, 20^{I}, 20^{II}), qui se compose d'une matrice (84) de cellules d'accumulateur (88, 88^{I}, 88^{II}), reliées électriquement les unes aux autres, dans la partie intérieure d'un boîtier (30, 34), et avec un système enfichable (118) qui comprend plusieurs connecteurs (131, 132, 133, 134, 135, 136, 141),
**caractérisé en ce que**
le boîtier (30, 34) est en forme de coque et est composé en tant que boîtier d'ensemble composé de deux ou plusieurs boîtiers partiels, cependant qu'au moins un premier connecteur (131) sur un côté du boîtier (30, 34) est un connecteur (131) qui réunit des contacts (161, 162, 163, 164, 165, 166) pour l'énergie électrique aussi bien que des contacts pour des signaux de commande, avec au moins cinq ou six intervalles de trame de contact (151, 152, 153, 154, 155), cependant que des surfaces de contact (161, 162, 163, 164, 165, 166) du premier connecteur (131) couvrent un plan commun (170).

2. Accumulateur d'énergie (1, 22) selon la revendication 1, **caractérisé en ce qu'**un connecteur antagoniste (141) du système enfichable (118) est fixé sur un côté intérieur du puits (20, 20^{I}, 20^{II}) de préférence sur le bord d'une zone d'extrémité du puits (20, 20^{I}, 20^{II}).

3. Accumulateur d'énergie (1, 22) selon l'une des revendications précédentes,
**caractérisé en ce qu'**au moins le premier connecteur (131), de préférence le premier connecteur (131) et son connecteur antagoniste (141), est équipé de contacts (161) touchables sans danger, de préférence indépendants de la polarité et/ou du sens de circulation du courant, de préférence tous les contacts (161, 162, 163, 164, 165, 166) au moins du premier connecteur (131), en particulier tous les contacts (161, 162, 163, 164, 165, 166) de tous les connecteurs (131, 141), ont des contacts (161, 162, 163, 164, 165, 166) indépendants de la polarité et en particulier indépendants du sens de circulation du courant.

4. Accumulateur d'énergie (1, 22) selon l'une des revendications précédentes,
**caractérisé en ce qu'**un compartiment (60) qui s'étend en tant que compartiment de prise de charge (60) s'étend à côté du puits (20, 20^{I}, 20^{II}) le long de l'accumulateur (24) qui se trouve dans le puits (20, 20^{I}, 20^{II}), cependant que le compartiment (60) est conçu de préférence pour former une connexion électrique (78) avec le premier connecteur (131) par un câble (80), en particulier en intercalant le connecteur antagoniste (141) du premier connecteur (131) et cependant qu'en particulier un état de mode de chargement (46) de l'accumulateur (24) peut être établi à l'aide du compartiment (60) par des contacts électriques (161, 162, 163, 164, 165, 166) pour la conduction de flux électriques.

5. Accumulateur d'énergie (1, 22) selon l'une des revendications précédentes,
**caractérisé en ce qu'**il existe un verrouillage (62) introduisant une force, placé latéralement, pour l'arrêt de l'accumulateur (24) dans le puits (20, 20^{I}, 20^{II}), verrouillage qui est de préférence déblocable par l'introduction d'une force transversale (204) avec une force du domaine de Newton à un chiffre.

6. Accumulateur d'énergie (1, 22) selon l'une des revendications précédentes,
**caractérisé en ce qu'**il existe sur l'accumulateur d'énergie (1, 22) un couvercle de puits amovible (66), de préférence avec une poignée de couvercle (68), dans une zone frontale, de préférence au voisinage de la surface de préhension (50), couvercle derrière lequel un connecteur femelle (70) ou un connecteur (72) est accessible, par lequel l'accumulateur (24), à l'état enfiché, peut être rechargé de préférence au moyen d'une source de courant, comme un chargeur (74), qui peut être raccordée au connecteur femelle (70) ou au connecteur (72).

7. Accumulateur d'énergie (1, 22) selon l'une des revendications précédentes,
**caractérisé en ce que** le connecteur (131) présente des contacts électriques (171, 172) pour l'énergie dans la zone d'au moins un côté extérieur du connecteur (131), cependant que de préférence les contacts (171, 172) pour l'énergie et des contacts (174, 176) pour des signaux de commande sont placés dans une trame de contacts (151, 152, 153, 154, 155) avec une mesure répétitive avec un intervalle entre 7 mm et 8 mm, cependant qu'un contact (174, 176) pour des signaux de commande est placé entre les contacts (171, 172) pour l'énergie, ces derniers contacts étant séparés d'au moins cinq intervalles de trame de contact (151, 152, 153, 154, 155).

8. Accumulateur d'énergie (1, 22) selon l'une des revendications précédentes,
**caractérisé en ce que** le connecteur (131) est un connecteur plat en plastique (120) soudé par ultrasons et présente en particulier un ajustement (122, 122^{I}), l'ajustement (122, 122^{I}) étant un codage de valeur de tension type de l'accumulateur d'énergie (1, 22) comme une tension de charge maximale.

9. Accumulateur d'énergie (1, 22) selon l'une des revendications précédentes,
**caractérisé en ce que** chaque contact (161, 162, 163, 164, 165, 166) d'un connecteur (131, 141) comprend une zone mâle (182) et une zone femelle (184), cependant que de préférence un contact (161, 162, 163, 164, 165, 166) est divisé substantiellement en moitiés dans sa zone mâle (182) et sa zone femelle (184).

10. Accumulateur d'énergie (1, 22) selon l'une des revendications précédentes,
**caractérisé en ce qu'**au moins le premier connecteur (131), de préférence tous les connecteurs (141) du système enfichable (118), a des contacts individuels qui peuvent être séparés ou qui sont spatialement verrouillables (186), parmi lesquels chacun des contacts individuels (186) présente une languette de contact électroconductrice (188) qui forme la surface de contact (161, 162, 163, 164, 165, 166), comme une languette en cuivre, une languette étamée ou une languette dorée, cependant qu'il existe une zone de logement parallélépipédique (190) directement sur un premier côté de la languette de contact (188) et une zone de logement prismatique en forme de U (192) sur un second côté opposé de la languette de contact (188) pour recevoir chacune une protection contre le toucher (194, 196) si bien qu'en particulier une conductivité électrique du contact individuel (186) ne peut être constituée que sur un côté frontal situé à l'intérieur (198) d'une protection contre le toucher (194, 196).

11. Accumulateur d'énergie (1, 22) selon l'une des revendications précédentes,
**caractérisé en ce que** l'accumulateur (24) coopère avec un fusible et l'électronique de l'accumulateur (110) avec des commutateurs, en particulier électroniques (112), en particulier comme partie de l'électronique de l'accumulateur (110), par lesquels un flux de courant (202) vers le premier connecteur (131) et/ou à partir de celui-ci peut être interrompu.

12. Accumulateur d'énergie (1, 22) selon l'une des revendications précédentes,
**caractérisé en ce que** le premier connecteur (131) est équipé de contacts (178, 180) pour une communication sérielle, en particulier pour une communication selon un protocole CAN-BUS, et que de préférence l'électronique de l'accumulateur (110) comprend une interface (114) avec un pilote IC (116) pour une communication sérielle comme une communication selon un protocole CAN-BUS, interface qui est raccordée par un faisceau de câbles aux contacts (178, 180) pour la communication sérielle.

13. Accumulateur d'énergie (1, 22) selon l'une des revendications précédentes,
**caractérisé en ce que** les cellules d'accumulateur (88, 88^{I}, 88^{II}) de la matrice (84) sont des cellules d'ions de lithium (86) et/ou en particulier l'accumulateur d'énergie (1, 22) est conçu comme source d'énergie pour un entraînement par moteur électrique (16, 16^{I}), de préférence d'un véhicule de transport de charges (2, 4) comme une bicyclette de transport (2), un monte-escalier (4), un chariot de transport de charges, un chariot élévateur ou un diable (4).

14. Accumulateur d'énergie (1, 22) selon l'une des revendications précédentes,
**caractérisé en ce que** l'accumulateur d'énergie (1, 22) présente une électronique de l'accumulateur (110) avec laquelle au moins l'un des paramètres d'accumulateur température, tension ou courant peut être mesuré, en particulier avec laquelle une température d'une surface de cellule d'accumulateur (90, 92), une température ambiante exemplaire de cellule d'accumulateur, d'un ensemble de températures de surfaces de cellules d'accumulateur (90, 92) et/ou de températures ambiantes de cellules d'accumulateur, d'une tension de cellules d'accumulateur, d'une tension totale de la matrice de cellules (84) et/ou d'un courant total de la matrice de cellules (84) peut être mesurée.

15. Accumulateur d'énergie (1, 22) selon l'une des revendications précédentes, **caractérisé en ce que** l'accumulateur d'énergie (1, 22) a une surface de préhension (50) qui ferme l'accumulateur (24) d'un côté qui est opposée à l'un des connecteurs (131, 132, 141), en particulier à un premier connecteur (131), sur un côté opposé (26) du boîtier (30) et par rapport à laquelle des surfaces de guidage (51, 52, 53, 54) s'étendent sur le boîtier (30) en étant orientées transversalement.

16. Accumulateur (24) qui présente une surface de préhension (50) et plusieurs surfaces de guidage (51, 52), l'accumulateur (24) comprenant des accumulateurs de courant électrochimiques (88, 88^{I}, 88^{II}) montés en parallèle (104) et/ou en série (102), **caractérisé en ce que** l'accumulateur (24) présente un connecteur (131) et les accumulateurs de courant (88, 88^{I}, 88^{II}) sont délimités dans une orientation parallèle par le connecteur unique (131) avec plus de quatre contacts (161, 162, 163, 164, 165, 166), raccordé sur l'un des côtés (32) d'un boîtier (30) de l'accumulateur (24), le boîtier (30) étant composé de deux ou plusieurs boîtiers partiels.

17. Accumulateur (24) selon la revendication précédente, **caractérisé en ce que** le boîtier (30) de l'accumulateur (24) est formé par des demi-coques (34), fabriquées en particulier selon la technique de moulage par injection de matière plastique, avec des retraits (36) dans les zones d'angle (38) si bien qu'une division du boîtier (40) s'étend dans la surface de préhension (50), en particulier dans une poignée (48) de la surface de préhension (50) transversalement par rapport au sens de coulissement prévu (200).

18. Accumulateur (24) selon la revendication 16 ou 17, **caractérisé en ce qu'**une capacité de stockage du courant est créée par un regroupement de cellules d'accumulateur d'ions de lithium (86), en particulier de cellules rondes (86, 88, 88^{I}, 88^{II}) avec une base ronde (90) entre 18 mm et 21 mm, cependant que de préférence leurs surfaces enveloppantes (92), qui sont maintenues à distance (100) par des pièces de remplissage en forme de manchon (94, 94^{I},94^{II}), qui n'existent avantageusement que dans les zones marginales des surfaces enveloppantes (92), sont orientées parallèlement l'une par rapport à l'autre.

19. Accumulateur (24) selon l'une des trois revendications précédentes, **caractérisé en ce que** la surface de préhension (50) est une partie placée en amont, conçue comme une poignée (48), qui protège en particulier les zones qui suivent (42, 44, 46) du boîtier (30), partie qui est placée en amont d'un bouton de mise en marche (42) et/ou d'une surface de commande (44), cependant qu'en particulier la poignée (48) et le bouton de mise en marche (42) et/ou la surface de commande (44) sont placés dans un même plan par rapport au sens de coulissement (200).

20. Accumulateur (24) selon l'une des revendications 16 à 19, **caractérisé en ce que** le connecteur (131) doit être désigné de connecteur central qui est placé de préférence de manière excentrée sur le côté (32) de l'accumulateur (24), cependant qu'en particulier l'accumulateur (24) est approprié pour former une partie d'un accumulateur d'énergie (1, 22) selon l'une des revendications 1 à 15.
